(19) Europäisches Patentamt
European Patent Office
Office européen des brevets

(11) **EP 4 286 893 B1**

(12) **EUROPEAN PATENT SPECIFICATION**

(45) Date of publication and mention
of the grant of the patent:
**11.02.2026 Bulletin 2026/07**

(21) Application number: **21926380.3**

(22) Date of filing: **20.12.2021**

(51) International Patent Classification (IPC):
*G01S 17/34* (2020.01)    *G01S 7/481* (2006.01)
*G01S 7/4911* (2020.01)    *G01S 17/42* (2006.01)
*G01S 17/931* (2020.01)

(52) Cooperative Patent Classification (CPC):
**G01S 17/34; G01S 7/4814; G01S 7/4817;
G01S 7/4911; G01S 17/42; G01S 17/931**

(86) International application number:
**PCT/CN2021/139770**

(87) International publication number:
**WO 2022/174666 (25.08.2022 Gazette 2022/34)**

(54) **DETECTION APPARATUS, LASER RADAR, CHIP AND TERMINAL DEVICE**

**DETEKTIONSVORRICHTUNG, LASERRADAR, CHIP UND ENDGERÄTEVORRICHTUNG**

**APPAREIL DE DÉTECTION, RADAR LASER, PUCE ET DISPOSITIF TERMINAL**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.02.2021 CN 202110206758**

(43) Date of publication of application:
**06.12.2023 Bulletin 2023/49**

(73) Proprietor: **Shenzhen Yinwang Intelligent
Technologies Co., Ltd.
Shenzhen, Guangdong 518129 (CN)**

(72) Inventors:
• **YANG, Guangyao**
**Shenzhen, Guangdong 518129 (CN)**
• **HU, Xuan**
**Shenzhen, Guangdong 518129 (CN)**
• **SHI, Xianling**
**Shenzhen, Guangdong 518129 (CN)**
• **HUANG, Zhizhen**
**Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
EP-A1- 1 921 485    EP-A1- 3 614 170
CN-A- 104 683 035    CN-A- 105 785 395
CN-A- 107 505 626    CN-A- 109 375 201
CN-A- 110 857 990    JP-A- 2003 298 525

**Description**

**CROSS-REFERENCE TO RELATED APPLICATIONS**

This application claims priority to Chinese Patent Application No. 202110206758.0, filed with the China National Intellectual Property Administration on February 22, 2021 and entitled "DETECTION APPARATUS, LIDAR, CHIP, AND TERMINAL DEVICE.

**TECHNICAL FIELD**

This application relates to the field of detection technologies, and in particular, to a detection apparatus, a lidar, a chip, and a terminal device.

**BACKGROUND**

High-reliability, long-distance, and high-precision measurement of a vehicle to an external environment is usually implemented by using a lidar (light detection and ranging, LiDAR). At present, the lidar mostly adopts a pulse time-of-flight (time-of-flight, TOF) mode. The TOF-based lidar can emit an ultra-short optical pulse with high power, to implement ranging based on a time interval between time of receiving an echo that is of the optical pulse and that is reflected by an object and time of emitting the echo. For the TOF-based lidar, a measurement distance depends on pulse power, and ranging precision depends on a pulse width. However, it is difficult to increase the pulse power and reduce the pulse width at the same time, which restricts performance of the TOF-based lidar.

Therefore, a frequency modulated continuous wave (frequency modulated continuous wave, FMCW) mode-based lidar is provided. The FMCW-based lidar uses a coherent detection technology. It is difficult for an external interference beam to be coherently mixed with a local reference (local reference) beam to generate a beat frequency signal. Therefore, the FMCW-based lidar has good anti-interference performance. A laser beam emitted by the FMCW-based lidar is a frequency-modulated continuous laser beam. The laser beam is split into two beams. One beam is used as a local reference beam, and the other beam is used as a detection beam and is emitted to a target. After the detection beam meets the target, an echo signal is reflected, and a distance between the target and the FMCW-based lidar is calculated based on the echo signal and the local reference beam. For the FMCW-based lidar, ranging precision depends on a frequency sweep range, and a measurement distance depends on frequency sweep time. The frequency sweep range and frequency sweep time can be increased at the same time.

However, the FMCW-based lidar has a high requirement for a laser linewidth and frequency sweep linearity. Therefore, in the conventional technology, the FMCW-based lidar usually uses a lithium niobate modulator or a high-precision tunable resonant cavity to perform linear adjustment on an optical frequency. In this case, a volume of the lidar is large, and it is difficult to implement miniaturization and integration. Consequently, application in a vehicle-mounted scenario is limited.

EP 3 614 170 A1 discloses a distance measuring method and a distance measuring device for a distance measurement in accordance with the principle of a modulated continuous wave radar, wherein a first and a second laser radiation are generated so that the first laser radiation has a first frequency modulation and the second laser radiation has a second frequency modulation, wherein at least in sections a time derivative of the first frequency modulation is different from a time derivative of the second frequency modulation. The first and the second laser radiation are generated by modulating a base radiation by means of an electro-optical modulator, so that an output radiation comprising a carrier component and a plurality of sideband components is produced, wherein a first sideband component provides for the first laser radiation and a second sideband component provides for the second laser radiation.

EP 1 921 485 A1 discloses a DSB-SC system capable of suppressing a third order component. The DSB-SC modulation having high extinction ratio can be realized by adjusting the first order component, which is generated by applying a modulation signal, and the third order component, which is generated by applying a basic signal, to have reversed phase and the same intensity level, and then by applying the first order component to the third order component, these two components cancel each other.

**SUMMARY**

This application provides a detection apparatus, a lidar, a chip, and a terminal device, to implement miniaturization of the detection apparatus.

According to the invention, this application provides a detection apparatus. The detection apparatus includes a light source module, a modulation module, a first wavelength selection module, and an optical transceiver module. The light source module is configured to emit a continuous laser beam. The modulation module is configured to modulate the continuous laser beam from the light source module to obtain a first laser beam including a carrier signal and symmetric side band signals. The first wavelength selection module is configured to allow at least one side band signal in the symmetric side band signals to pass through and prevent the carrier signal from passing through, to obtain a second laser beam. In other words, the second laser beam includes at least one side band signal in the symmetric side band signals. The optical transceiver module is configured to: emit the second laser beam to a detection area, and receive a first echo signal for the second laser beam. The first echo signal includes the at least one side band signal, and a first side band signal in the at least one side band signal included in the first echo signal is used to detect a target.

Herein, if the second laser beam includes the symmetric side band signals, the first echo signal also includes the symmetric side band signals; or if the second laser beam includes the first side band signal in the symmetric side band signals, the first echo signal also includes the first side band signal in the symmetric side band signals.

Based on the detection apparatus, modulation and wavelength selection of the continuous laser beam emitted by the light source module are combined, to implement detection of the detection area. This helps reduce system complexity of the detection apparatus, to help implement volume miniaturization of the detection apparatus. In addition, the modulation module in the detection apparatus uses an external modulation mode, so that the modulation module can be decoupled from the light source module. Therefore, the light source module can fully optimize performance of emitting a continuous laser beam with a narrow linewidth without performing high-speed direct modulation. This helps improve ranging precision of the detection apparatus. Further, compared with directly generating a required wavelength, selecting a wavelength by using the first wavelength selection module helps reduce a loss of the detection apparatus.

According to the invention, the modulation module includes a silicon microring modulator, and the silicon microring modulator includes a straight waveguide and a ring waveguide that are coupled to each other. The straight waveguide and the ring waveguide are configured to modulate intensity of the continuous laser beam.

Because the silicon microring modulator has a mature manufacturing process, a simple structure, a small insertion loss, low modulation power consumption, and high modulation efficiency, as the modulation module, the silicon microring modulator helps simplify a manufacturing process of the detection apparatus, and helps increase transmit optical power and a signal-to-noise ratio of the detection apparatus, to help increase a measurement distance.

Further aspects of the invention can be found in the dependent claims.

## BRIEF DESCRIPTION OF DRAWINGS

FIG. 1 is a schematic diagram of a full width at half maximum according to this application;
FIG. 2a is a schematic diagram of a frequency modulation principle of an FMCW mode-based lidar according to this application;
FIG. 2b is a schematic diagram of a principle of stimulated Brillouin scattering effect according to this application;
FIG. 2c is a schematic diagram of a principle of stimulated Brillouin scattering effect according to this application;
FIG. 3a is a schematic diagram of an application scenario of a lidar according to this application;
FIG. 3b is a schematic diagram of another application scenario of a lidar according to this application;
FIG. 4 is a schematic diagram of a structure of a lidar according to this application;
FIG. 5a is a schematic diagram of a structure of a light source module according to this application;
FIG. 5b is a schematic diagram of a structure of another light source module according to this application;
FIG. 6a is a schematic diagram of a relationship between an ideal response curve and an actual response curve of a modulator according to this application;
FIG. 6b is a schematic diagram of a structure of a silicon microring modulator according to this application;
FIG. 6c is a schematic diagram of a structure of doping distribution of a silicon microring modulator according to this application;
FIG. 6d is a schematic diagram of a structure of another silicon microring modulator according to this application;
FIG. 7a is a schematic diagram of a relationship between a voltage applied to a silicon microring modulator and a wavelength of an absorption peak of the silicon microring modulator according to this application;
FIG. 7b is a schematic diagram of a principle of modulating light intensity by a silicon microring modulator according to this application;
FIG. 8 is a schematic diagram of a structure of an MZ modulator according to an example helpful for understanding this application but not covered by the claims;
FIG. 9a is a schematic diagram of a structure of a cascaded ring waveguide according to this application;
FIG. 9b is a schematic diagram of a structure of a fiber Bragg grating according to this application;
FIG. 10a is a schematic diagram of a structure of a scanner according to this application;
FIG. 10b is a schematic diagram of a structure of another scanner according to this application;
FIG. 11 is a schematic diagram of a structure of another lidar according to this application;

FIG. 12 is a schematic diagram of a structure of a second wavelength selection module according to this application;
FIG. 13a is a schematic diagram of a structure of an optical amplifier according to this application;
FIG. 13b is a schematic diagram of a connection relationship between an optical amplifier and a silicon-based straight waveguide according to this application; and
FIG. 14 is a schematic diagram of a structure of a polarization beam splitter according to this application.

## DESCRIPTION OF EMBODIMENTS

The following describes in detail embodiments of this application with reference to accompanying drawings.

The following describes some terms in this application. It should be noted that these explanations are intended to facilitate understanding by a person skilled in the art, but do not constitute a limitation on the protection scope claimed in this application.

1. Laser linewidth

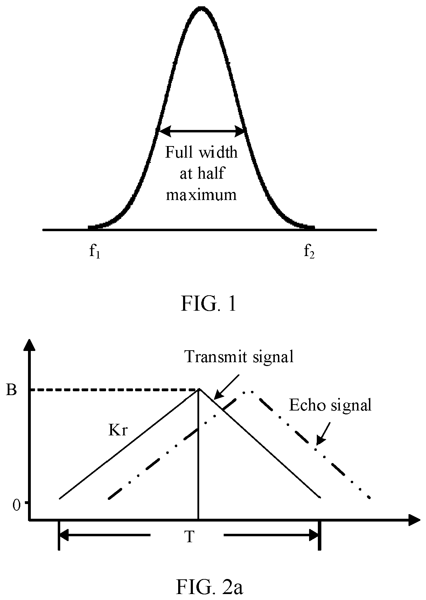

A laser linewidth refers to a full width at half maximum (or referred to as a full-width at half maximum) of a spectrum emitted by a laser, namely, a width between two frequencies corresponding to a half height of a peak value in the spectrum. Refer to the full width at half maximum shown in FIG. 1.

2. Double side band signals

An amplitude modulation signal includes a carrier signal and two frequency-shifted modulation signals, and the two frequency-shifted modulation signals are respectively on two sides of the carrier signal. A frequency of the carrier signal is not modulated and is consistent with a frequency of an input signal. A signal with a higher frequency in the frequency-shifted modulated signals is referred to as a positive side band signal (or referred to as an upper side band signal). That is, a frequency of the positive side band signal has a specific positive frequency shift compared with the frequency of the input signal, and frequency offset is equal to the frequency of the input signal. A signal with a lower frequency in the frequency-shifted modulated signals is referred to as a negative side band signal (or referred to as a lower side band signal). That is, a frequency of the negative side band signal has a specific negative frequency shift compared with the frequency of the input signal, and the frequency offset is also equal to the frequency of the input signal. It should be understood that, only one side band signal may be referred to as a single side band (single side band, SSB) signal.

3. Coherence length

A coherence length indicates a distance for coherent waves (for example, electromagnetic waves) to maintain a specific coherence degree for propagation. In other words, the coherence length is used to quantize a temporal coherence degree, and represents a propagation distance (or propagation time) whose coherence degree is significantly reduced. An interference phenomenon is obvious when a difference between paths of mutual interference waves is less than the coherence length. A longer coherence length indicates longer coherence time, and better temporal coherence of a light source. For example, the coherence length is equal to the coherence time multiplied by a speed of light in a vacuum.

The coherent waves are two columns of waves with a same frequency, a same vibration direction, and a constant phase difference. Simple harmonic motion of a mass point caused by two columns of simple harmonic waves at an overlapping position has a same frequency and a same vibration direction.

4. Phase noise

A phase noise is one of noises of a laser, and may lead the laser to output a limited linewidth. Output of a single-frequency laser is not strictly monochromatic light, and also has a phase noise. This leads to a limited linewidth of the output of the laser. The phase noise may be embodied as a continuous frequency shift, or a phase jump, or a combination of a continuous frequency shift and a phase jump.

5. Extinction ratio

An extinction ratio is a ratio of optical power P1 when the laser transmits all "1" codes to optical power P0 when the laser transmits all "0" codes. Theoretically, when a transmitter transmits a digital signal, no optical power is output when the transmitter transmits the 0 code. However, due to a problem of a light source component or improper selection of a direct current bias, the transmitter actually outputs weak light when transmitting the 0 code. In this case, sensitivity of a receiver decreases. The extinction ratio is a performance indicator of the transmitter.

The extinction ratio of the transmitter directly affects the sensitivity of the receiver. To prevent the sensitivity of the receiver from decreasing significantly, the extinction ratio should be generally greater than 10 decibels (dB). When the laser is used as the transmitter, if a bias current of the laser is very high, the extinction ratio may deteriorate, and the sensitivity of the receiver may be reduced.

6. Pre-emphasis

Pre-emphasis, also referred to as predistortion, is a signal processing manner in which a high-frequency component of an input signal is compensated at a transmit end. As a signal rate increases, the signal is greatly damaged during transmission. To obtain a good signal waveform at a receive end, the damaged signal needs to be compensated. The key of a pre-emphasis technology is to enhance the high-frequency component of the signal at a start end of a transmission line to compensate for excessive attenuation of the high-frequency component during transmission. The pre-emphasis has no impact on a noise, and therefore, an output signal-to-noise ratio is increased effectively.

Briefly, a principle of the pre-emphasis is as follows: If an accurate electrical signal is input, a distorted optical signal is output. Therefore, the electrical signal is pre-compensated, and the distorted electrical signal is input, so that an accurate optical signal is obtained.

7. Roll-off speed

An ideal band-pass filter should have a totally flat passband, for example, a passband in which there is no gain or attenuation and outside which all frequencies are totally attenuated. Actually, there is no ideal band-pass filter. A filter cannot totally attenuate all frequencies beyond an expected frequency range, especially a range within which a frequency is attenuated but is not isolated outside a desired passband. This is usually referred to as a roll-off phenomenon of the filter.

A roll-off rate is a slope of a correspondence between a response amplitude and a response frequency outside a passband of the filter.

8. System-on-a-chip (system-on-a-chip, SoC)

A system-on-a-chip is a complete system integrated on a single chip.

9. External modulation

External modulation means that after a laser beam is formed, a modulation signal is loaded to the laser beam, so that some physical features (such as an amplitude, a frequency, and a phase) of a modulator change accordingly. When signal light passes through the modulator, some parameters of the signal light are modulated, to implement amplitude modulation, frequency modulation, phase modulation, intensity modulation, pulse modulation, and the like.

10. Frequency sweep

Frequency sweep is a process in which a frequency of a signal changes continuously from high to low (or from low to high) in a frequency band.

11. Q value

A Q value is a ratio of total energy stored in a silicon nitride microring to energy lost in each propagation. The Q value reflects a life of a photon in the silicon nitride microring. A larger Q value indicates a longer life of the photon.

The foregoing describes some terms in this application, and the following describes technical features in this application. It should be noted that these explanations are intended to facilitate understanding by a person skilled in the art, but do not constitute a limitation on the protection scope claimed in this application.

An FMCW mode-based lidar transmits a column of continuous frequency modulated millimeter waves to a target, and a frequency of a transmitted signal changes based on a modulation voltage in time domain. Frequency modulation is used for a transmit signal transmitted by the FMCW mode-based lidar. A common modulation signal includes a sine wave signal, a sawtooth wave signal, a triangular wave signal, and the like. FIG. 2a is a schematic diagram of a frequency modulation principle of an FMCW mode-based lidar according to this application. FIG. 2a is an example in which a modulation signal is a triangular wave signal, a frequency sweep period (or referred to as a modulation period or duration of one time of frequency sweep) is T, a frequency sweep bandwidth is B, and a frequency modulation rate is $Kr_1$. It should be noted that the FMCW mode-based lidar may also be referred to as an FMCW lidar.

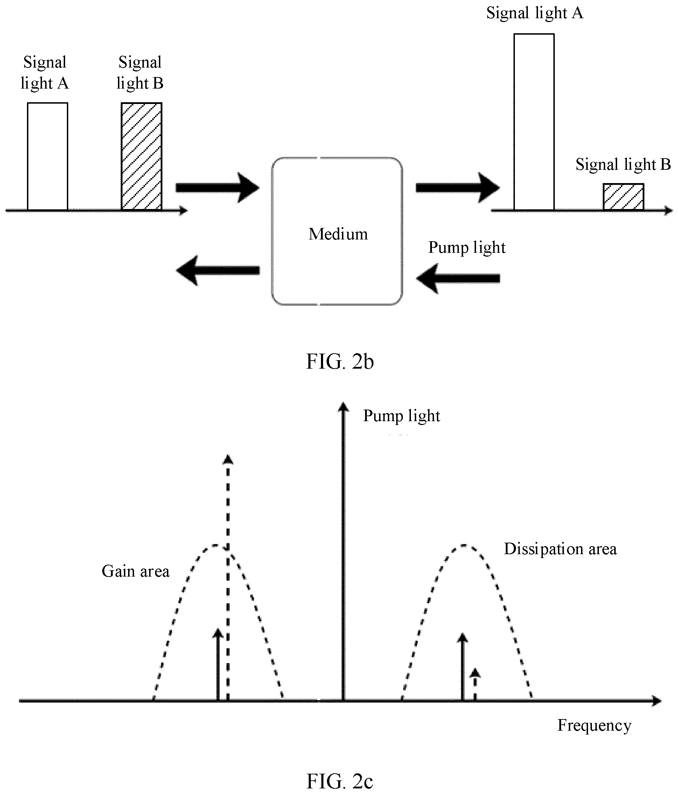

Energy transfer between light beams that are oppositely propagated in a same medium is caused by electrostriction effect, and this effect is referred to as stimulated Brillouin scattering effect. Energy transfer efficiency is determined by a frequency difference between the two light beams and a physical feature (for example, a material and a length) of the medium, and the energy is transferred from high-frequency light to low-frequency light. FIG. 2b is a schematic diagram of a principle of stimulated Brillouin scattering effect according to this application. In this example, signal light A, signal light B, and pump light are used as an example. Propagation directions of the signal light A and the signal light B are both opposite to a propagation direction of the pump light in a same medium. For example, the propagation directions of the signal light A and the signal light B are both from left to right, and the propagation direction of the pump light is from right to left. When stimulated Brillouin scattering effect occurs in the medium, the signal light B transfers a large amount of energy to the pump light, and the pump light transfers a large amount of energy to the signal light A, where a frequency of the signal light B is greater than a frequency of the pump light, a frequency of the pump light is greater than a frequency of the signal light A, a difference between the frequency of the signal light B and the frequency of the pump light meets a preset range, and a difference between the frequency of the pump light and the frequency of the signal light A meets a preset range. For example, the preset range may be greater than 0 and not greater than a threshold.

Widths of a gain area and a dissipation area may be tens of megahertz (MHz), as shown in FIG. 2c. Therefore, a gain frequency range is only tens of MHz, and a frequency sweep range of the FMCW lidar may reach a magnitude of gigahertz (GHz). In this case, a short pulse or multi-frequency modulation pump light is required to increase the width of the gain area, to extend a gain area range to the magnitude of GHz (up to approximately 5 GHz). In this way, a gain can be generated for all echo signals within the entire frequency sweep range.

In the following scenario description, a lidar is used as an example for description. That is, the lidar in the following may be replaced with a detection apparatus.

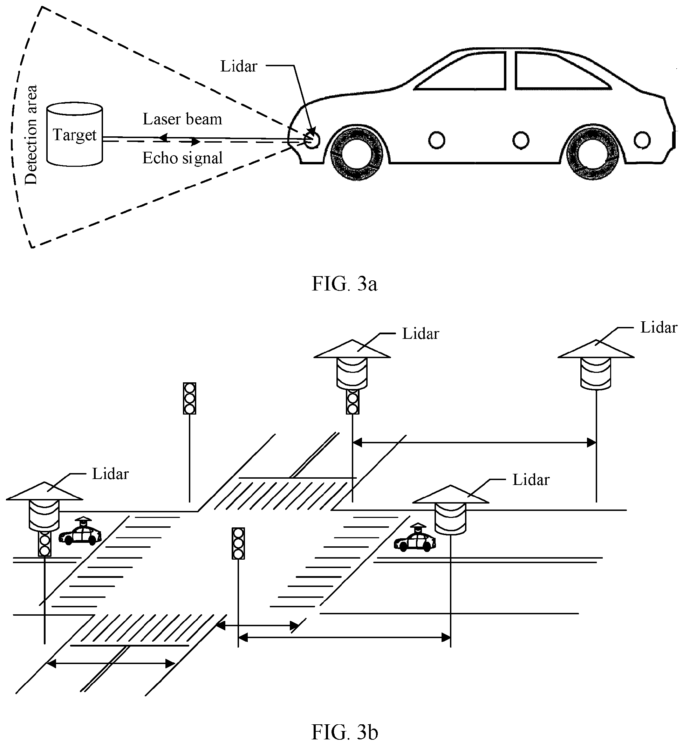

Based on the foregoing content, FIG. 3a is a schematic diagram of an application scenario of a lidar according to this application. The lidar emits a laser beam in a specific direction. If a target exists within a specific distance in a transmitting direction of the laser beam, the target may reflect the received laser beam back to the lidar (referred to as an echo signal). The lidar may determine association information of the target based on the echo signal, for example, a distance to the target, a moving speed of the target, a posture or a point cloud diagram of the target. It should be understood that, in this example, a lidar deployed at a front end of a vehicle is used as an example. The lidar may sense a sector area shown in a dashed box, and the sector area may be referred to as a detection area of the lidar.

The application scenario may be, for example, unmanned driving, self-driving, assisted driving, intelligent driving, or a networked vehicle. In the scenario, the lidar may be installed on a vehicle (for example, an unmanned vehicle, a smart vehicle, an electric vehicle, or a digital vehicle) and used as a vehicle-mounted lidar (for example, a vehicle-mounted FMCW lidar). The vehicle-mounted lidar can obtain detected measurement information such as longitude and latitude, a speed, an orientation, and a distance to a surrounding object in real time or periodically, and then work with an advanced driving assistance system (advanced driving assistant system, ADAS) to implement assisted driving or unmanned driving of the vehicle based on the measurement information. For example, the vehicle-mounted lidar may determine a position of the vehicle through the longitude and the latitude, or may determine a traveling direction and a destination of the vehicle in a future period of time through the speed and the orientation, or may determine a quantity of obstacles around the vehicle, density of the obstacles, and the like through the distance to the surrounding object. The vehicle-mounted lidar can further implement surveying and mapping, and the like. Alternatively, the lidar may be installed on an unmanned aerial vehicle, and used as an airborne lidar (for example, an airborne FMCW lidar) or the like. Alternatively, the lidar may be installed on a road side traffic device (for example, a road side unit (road side unit, RSU)), and used as a road side traffic lidar. Refer to FIG. 3b. Intelligent vehicle-road collaboration may be implemented.

It should be noted that the foregoing application scenario is merely an example, and the lidar provided in this application may be further applied to a plurality of other scenarios, but is not limited to being applied to the scenario shown in the foregoing example. For example, the lidar may be further applied to a terminal device or a component disposed in the terminal device. The terminal device may be, for example, a smartphone, a smart home device, a smart manufacturing device, a robot, an unmanned aerial vehicle, or an intelligent transport device (for example, an automated guided vehicle (automated guided vehicle, AGV) or an unmanned transport vehicle). In addition, the lidar may alternatively be disposed at a position, for example, two sides of the vehicle or a tail of the vehicle. This is not limited in this application.

With wide application of the lidar, a higher requirement is imposed on miniaturization of the lidar. In addition, when the lidar measures the association information of the target, the lidar needs to have high ranging precision and a large ranging range, to improve accuracy of obtaining the association information of the target.

In view of this, this application provides a detection apparatus. The detection apparatus may be miniaturized, and has high ranging precision and a large ranging range.

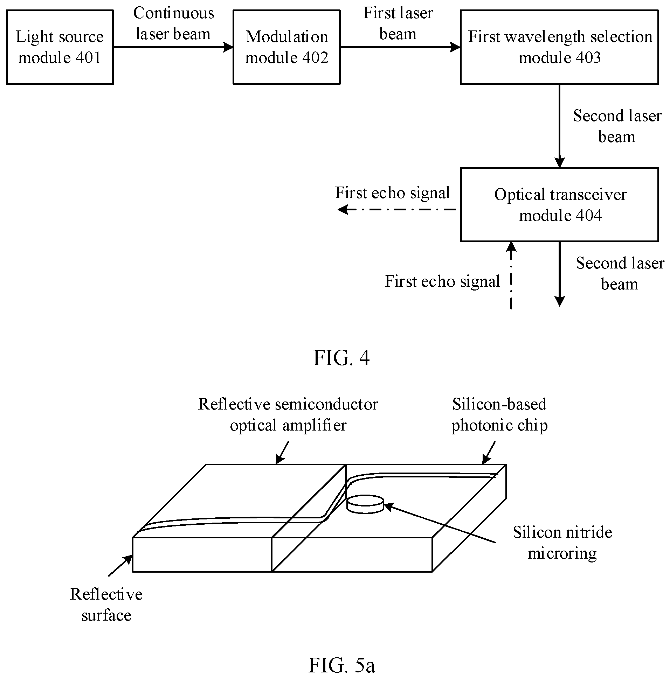

The following describes in detail the detection apparatus provided in this application with reference to FIG. 4, FIG. 5a and FIG. 5b, FIG. 6a to FIG. 6d, FIG. 7a and FIG. 7b, FIG. 8, FIG. 9a and FIG. 9b, FIG. 10a and FIG. 10b, FIG. 11, FIG. 12, FIG. 13a and FIG. 13b, and FIG. 14.

Based on the foregoing content, FIG. 4 is a schematic diagram of a structure of a detection apparatus according to this application. The detection apparatus may include a light source module 401, a modulation module 402, a first wavelength selection module 403, and an optical transceiver module 404. The light source module 401 is configured to emit a continuous laser beam. The modulation module 402 is configured to modulate the continuous laser beam from the light source module, to obtain a first laser beam including a carrier signal and symmetric side band signals. It may also be understood that the first laser beam carries three parts of signals, namely, the carrier signal and the two side band signals. The first wavelength selection module 403 is configured to allow at least one side band signal in the symmetric side band signals to pass through and prevent the carrier signal from passing through, to obtain a second laser beam. It may also be understood that the first wavelength selection module 403 is configured to allow the two side band signals to pass through and prevent the carrier signal from passing through, or is configured to allow one of the two side band signals to pass through and prevent the carrier signal from passing through. The optical transceiver module 404 is configured to: emit the second laser beam to a detection area, and receive a first echo signal for the second laser beam. The first echo signal includes the at least one side band signal, and a first side band signal in the at least one side band signal included in the first echo signal is used to detect a target. It should be noted that, if the second laser beam includes two side band signals, the first echo signal also includes two side band signals; or if the second laser beam includes one side band signal, the first echo signal also includes one side band signal.

Based on the detection apparatus, modulation and wavelength selection of the continuous laser beam emitted by the light source module are combined, to implement detection of the detection area. This helps reduce system complexity of the detection apparatus, to help implement volume miniaturization of the detection apparatus. In addition, the modulation module in the detection apparatus uses an external modulation mode, so that the modulation module can be decoupled from the light source module. Therefore, the light source module can fully optimize performance of emitting a continuous laser beam with a narrow linewidth without performing high-speed direct modulation. This helps improve ranging precision of the detection apparatus.

It should be noted that the symmetric side band signals in this application are first-order symmetric side band signals.

In a possible implementation, the light source module 401, the modulation module 402, the first wavelength selection module 403, and the optical transceiver module 404 may be integrated into a same chip, so that the detection apparatus can have high integration. This helps reduce a volume of the detection apparatus.

Further, optionally, the light source module 401, the modulation module 402, the first wavelength selection module 403, and the optical transceiver module 404 all need to have good compatibility with a silicon-based waveguide, to implement integration into a same chip. In addition, different modules may be connected to each other by using the silicon-based waveguide. This helps avoid introducing an unnecessary coupling loss, so that performance of the detection apparatus can be improved.

The following separately describes the functional modules shown in FIG. 4, to provide an example of a specific implementation. For ease of description, the light source module, the modulation module, the first wavelength selection module, the optical transceiver module, and the processing module in the following are not identified.

1. Light source module

In a possible implementation, the light source module may be configured to emit a continuous laser beam with a narrow linewidth. For example, a linewidth range of the continuous laser beam is greater than 0 and not greater than 3 megahertz (MHz). Further, the linewidth range of the continuous laser beam is greater than 0 and not greater than 100 kilohertz (kHz). Further, optionally, the continuous laser beam is a single-frequency continuous laser beam.

In a possible implementation, a single-frequency continuous laser beam with a narrow linewidth may be light in a 1550 nanometer (nm) band range, or may be light in a 905 nm band range, or may be light in a 940 nm band range.

Because the detection apparatus needs to perform coherent detection on an echo signal and a reference signal during ranging, a light source module with good coherence needs to be selected. In other words, the light source module needs to have a long coherence length. For example, the coherence length is not less than 50 meters, and further, the coherence length is not less than 100 meters. It should be understood that there is a specific relationship between a coherence length of the light source module and a linewidth. For example, the coherence length is not less than 50 meters, and the corresponding linewidth is approximately not greater than 3 MHz. For another example, the coherence length is not less than 100 meters, and the corresponding linewidth is approximately not greater than 1.5 MHz.

The light source module that emits a continuous laser beam with a narrow linewidth helps reduce interference of a phase noise of the light source module to ranging precision, and helps improve ranging precision during long-distance measurement. In addition, a narrower linewidth of the continuous laser beam indicates a longer coherence length of the continuous laser beam. To implement centimeter-level ranging precision, the coherence length of the continuous laser beam emitted by the light source module needs to be approximately 10 times greater than a ranging range (namely, a farthest ranging range).

In a possible implementation, optical power that is output by the light source module is usually greater than 1 mW, and corresponding relative intensity fluctuation is less than -30 dB. To avoid impact of coherent detection on a signal-to-noise ratio as much as possible, the optical power that is output by the light source module and a center frequency (or referred to as a center wavelength) of the emitted continuous laser beam need to be stable. With reference to FIG. 2a, within a frequency sweep period T, fluctuation of the center frequency of the continuous laser beam emitted by the light source module needs to be less than frequency sweep non-linearity (which may represent a difference between actual frequency sweep and ideal linear frequency sweep) and the linewidth of the continuous laser beam. Optionally, fluctuation of power of light of the continuous laser beam emitted by the light source module needs to be small enough, for example, 1%.

Further, optionally, because the center frequency of the laser beam is affected by a temperature of the laser, and the like. To avoid impact on a ranging result as much as possible, a frequency shift of the laser is less than 100 MHz/s.

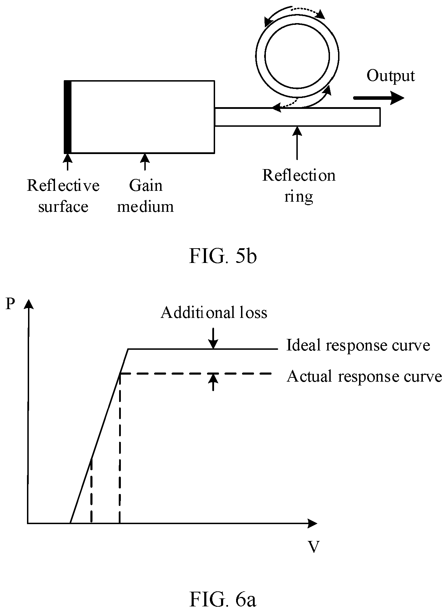

In a possible implementation, the light source module may be a laser. The laser may be, for example, a semiconductor laser or an optical fiber laser. A material of the semiconductor laser may be an III/V group material. FIG. 5a or FIG. 5b (FIG. 5b is a simplified schematic diagram of FIG. 5a) is a schematic diagram of a structure of a light source module according to this application. An example in which the light source module is a semiconductor laser of an III/V group material is used. The laser may include a reflective semiconductor optical amplifier of an III/V group material and a silicon nitride microring located on a silicon-based photonic chip. One end of the reflective semiconductor optical amplifier of the III/V group material is bonded with the silicon-based photonic chip, and the other end of the reflective semiconductor optical amplifier is a reflective surface (for example, a reflector bonded with the reflective semiconductor optical amplifier of the III/V group material). It should be understood that the reflective semiconductor optical amplifier of the III/V group material may be used as a gain medium of the laser, and the reflective surface of the reflective semiconductor optical amplifier of the III/V group material and the silicon nitride microring form an optical resonant cavity of the laser. The optical resonant cavity may be used to select a specific wavelength, and the selected specific wavelength of the light is a wavelength of the continuous laser beam that is output by the laser. Because the silicon nitride microring has a very small volume and an extremely low insertion loss, a Q value (quality factor) may reach a magnitude of 10^7. Therefore, the light source module can obtain a narrow linewidth feature and a long coherence length feature. As the light source module in the detection apparatus, the laser may implement high ranging precision during long-distance measurement.

With reference to FIG. 5a or FIG. 5b, the silicon-based photonic chip and the reflective semiconductor optical amplifier of the III/V group material may be integrated in the following two manners.

Manner 1: Wafer bonding.

Specifically, the reflective semiconductor optical amplifier of the III/V group material is directly bonded on a silicon-based substrate.

Manner 2: Coupling.

A port may be reserved for the reflective semiconductor optical amplifier of the III/V group material during photoetching and manufacturing of the silicon-based photonic chip, and then the reflective semiconductor optical amplifier of the III/V group material is bonded with the reserved port on the silicon-based photonic chip, to implement coupling between the reflective semiconductor optical amplifier of the III/V group material and the silicon-based photonic chip.

It should be noted that the light source module may alternatively be a distributed feedback (distributed feedback, DFB) laser or a distributed Bragg reflection (distributed Bragg reflector, DBR) laser. The DFB laser or DBR laser is easy to integrate, and a linewidth of a continuous laser beam emitted by the DFB laser or DBR laser can reach a magnitude of hundreds of kHz. It should be understood that, because frequency sweep is not performed on the continuous laser beam with the narrow linewidth emitted by the light source module, the light source module may also be referred to as a seed light source.

It should be further noted that the continuous laser beam with the narrow linewidth emitted by the light source module is incident light of the modulation module. In other words, the incident light in the modulation module in the following is the continuous laser beam with the narrow linewidth emitted by the light source module.

2. Modulation module

In a possible implementation, the modulation module may be configured to modulate the continuous laser beam from the light source module, to obtain a first laser beam including a carrier signal and symmetric side band signals. Further, optionally, the modulation module may be configured to modulate light intensity of the received continuous laser beam to obtain a first laser beam.

In a possible implementation, the modulation module needs to meet the following three features, to modulate the continuous laser beam from the light source module to obtain the first laser beam.

Feature 1.1: The modulation module can modulate the received connected laser beam at a high frequency and in a large frequency range.

In a possible implementation, the modulation module may adjust the light intensity of the received connected laser beam based on an instantaneous amplitude of a received radio frequency (radio frequency, RF) signal. The instantaneous amplitude of the radio frequency signal is a voltage applied to the modulation module. For example, when the instantaneous amplitude of the radio frequency signal reaches 5 V, an extinction ratio of the modulation module is greater than 7 dB. It should be understood that, because the modulation module modulates the continuous laser beam with the narrow linewidth based on the radio frequency signal, the radio frequency signal may also be referred to as a modulation signal.

Because the radio frequency signal may not be an ideal sine function, a high-order side band signal may exist in the first laser beam obtained through modulation by the modulation module. Generally, the instantaneous amplitude of the radio frequency signal and a power function of incident light need to maintain good monotonicity and specific linearity, to avoid as much as possible interference to a measurement result due to excessively high power of the high-order side band signal.

Further, optionally, a modulation bandwidth is not less than 4 GHz. In this way, a second laser beam having a sufficiently large frequency sweep range is generated, so that the detection apparatus can have high ranging precision. It should be understood that a frequency sweep range of the second laser beam is limited by the modulation bandwidth, and ranging precision of the detection apparatus depends on the frequency sweep range of the second laser beam.

Feature 1.2: The modulation module can generate symmetric first-order side band signals.

Because a frequency shift of the symmetric side band signals relative to the carrier signal is equal to an integer multiple of a frequency of the received radio frequency signal, a center frequency of the side band may be controlled by changing the frequency of the radio frequency signal, to implement frequency sweep. It should be understood that the modulation module may also generate a high-order side band signal.

Feature 1.3: The modulation module does not change the center frequency of the continuous laser beam with the narrow linewidth emitted by the light source module.

In a possible implementation, the light source module and the modulation module are separated from each other. In other words, the modulation module performs external modulation on the continuous laser beam emitted by the light source module. Specifically, the modulation module implements frequency sweep by generating a side band signal, and does not need to change the center frequency of the continuous laser beam emitted by the light source module. Through the external modulation, a narrow linewidth feature of the continuous laser beam emitted by the light source module can be effectively ensured, and the light source module does not need to change the center frequency of the emitted continuous laser beam. A manufacturing process of the light source module that does not need to change the center frequency of the emitted continuous laser beam is simple. It should be understood that, changing the center frequency of the laser beam emitted by the laser usually needs to change a feature (for example, a cavity length of the resonant cavity) of the resonant cavity of the laser. Changing the feature of the resonant cavity of the laser may cause a linewidth of the laser beam emitted by the laser to be increased. In addition, when the cavity length of the resonant cavity of the laser is tunable, a requirement on a corresponding manufacturing process of the laser is high.

In a possible implementation, an insertion loss of the modulation module is less than 1.5 dB, and an additional loss of the modulation module is less than 2 dB. For the additional loss of the modulation module, refer to a schematic diagram of a relationship between an ideal response curve and an actual response curve of a modulator shown in FIG. 6a.

Based on the foregoing features of the modulation module, the following shows an example of two possible structures of the modulation module.

Structure 1: The modulation module includes a silicon microring modulator (silicon microring modulator).

In a possible implementation, the silicon microring modulator may modulate the continuous laser beam from the light source module by using optoelectronic effect of a crystal, to obtain a first laser beam.

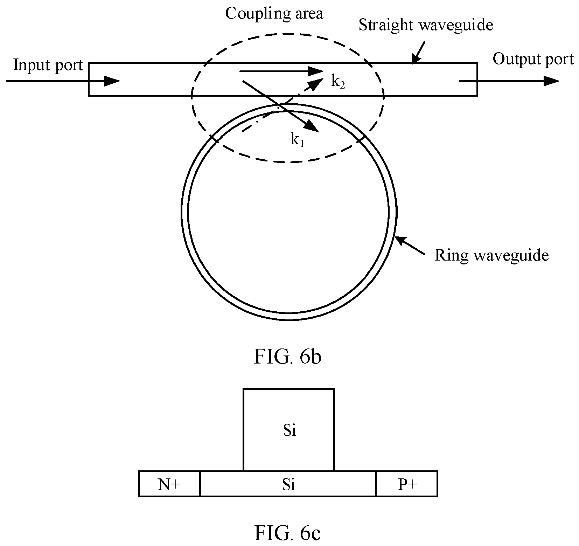

FIG. 6b is a schematic diagram of a structure of a silicon microring modulator according to this application. A tunable silicon-based microring is used as an example of the silicon microring modulator. The tunable silicon-based microring includes a straight waveguide and a ring waveguide (which may be referred to as an all-pass type) that are coupled to each other. That is, the tunable ring waveguide is placed close to the straight waveguide, and the tunable ring waveguide forms a resonant cavity. It may also be understood that the straight waveguide and the ring waveguide are configured to modulate intensity of the continuous laser beam. Specifically, the straight waveguide is configured to transmit the continuous laser beam from the light source module. When the continuous laser beam passes through a coupling area between the straight waveguide and the ring waveguide, a part of the continuous laser beam is coupled into the ring waveguide, and a part of the continuous laser beam is reserved in the straight waveguide for further transmission. The ring waveguide modulates light intensity of the continuous laser beam coupled into the ring waveguide, and through propagation along a circumference, the continuous laser beams reaches the coupling area between the straight waveguide and the ring waveguide. In this case, a part of the continuous laser beam (namely, the first laser beam) is coupled into the straight waveguide, and a part of the continuous laser beam is reserved in the ring waveguide. The straight waveguide is further configured to propagate the first laser beam from the ring waveguide to the first wavelength selection module. It may also be understood that light of a specific wavelength that is in the continuous laser beam from the light source module and that is propagated in the straight waveguide is absorbed by the ring waveguide (namely, a loss is generated), and a light beam having a wavelength other than the specific wavelength is coupled from the ring waveguide into the straight waveguide again to continue to propagate.

FIG. 6c is a schematic diagram of a structure of another silicon microring modulator according to this application. A tunable silicon-based microring is used as an example of the silicon microring modulator. The tunable silicon-based microring includes two straight waveguides and one ring waveguide. The two straight waveguides are separately coupled to the ring waveguide, and may be referred to as an add-drop type. Specifically, the two straight waveguides are respectively configured to transmit the continuous laser beam from the light source module. When the continuous laser beam is input into one straight waveguide, and a wavelength of the continuous laser beam is the same as a resonant wavelength of the ring waveguide, the continuous laser beam is efficiently coupled into the ring waveguide, and is coupled and emitted from the other straight waveguide. When a wavelength of the continuous laser beam is different from a resonance wavelength of the ring waveguide, the continuous laser beam is directly emitted by the original straight waveguide. When the continuous laser beam includes a plurality of wavelength components, a wavelength component that is different from the resonant wavelength of the ring waveguide is emitted from the original straight waveguide, and a component that is the same as the resonant wavelength of the ring waveguide is emitted from the other straight waveguide. It may also be understood that, when the continuous laser beam passes through the coupling area between the straight waveguide and the ring waveguide, light of a wavelength that meets a resonance condition is output from a drop (drop) port, light of another wavelength is output from a through (through) port, and spectrums of the drop port and the through port are complementary to each other.

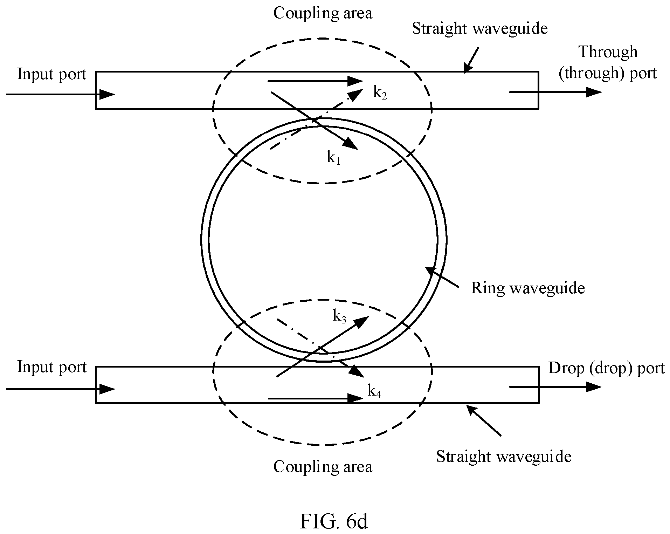

Materials of the straight waveguide and the ring waveguide in FIG. 6b or FIG. 6c may both be silicon, and different types of doping (for example, P doping and N doping) exist inside and outside the ring waveguide. Refer to FIG. 6d.

The following describes a principle of modulating the received continuous laser beam by using the silicon microring modulator.

Because the ring waveguide in the silicon microring modulator is equivalent to a resonant cavity, different types of doping exist inside and outside the ring waveguide. In this way, a carrier concentration of the ring waveguide may be changed by changing a voltage applied to the ring waveguide, so that a cavity length of the resonant cavity can be changed, to module light intensity of the continuous laser beam that is coupled into the ring waveguide. In other words, when the voltage applied to the ring waveguide changes, the cavity length of the resonant cavity formed by the ring waveguide changes, and a frequency (or a wavelength) of a laser beam that is allowed to pass through or that is prevented from passing through the ring waveguide changes. For example, when no voltage is applied to the ring waveguide, the ring waveguide may prevent light in a 1550 nm wavelength range from passing through and allow light in a 1551 nm wavelength range to pass through. Alternatively, when a 1 V voltage is applied to the ring waveguide, the ring waveguide may allow light in a 1550 nm wavelength range to pass through and prevent light in a 1551 nm wavelength range from passing through.

In a possible implementation, the detection apparatus may further include a radio frequency module. With reference to FIG. 6b or FIG. 6c, the radio frequency module is configured to input a first radio frequency signal to the ring waveguide, where the first radio frequency signal is a linear frequency modulation signal, and the first radio frequency signal is used by the ring waveguide to modulate the intensity of the continuous laser beam.

For example, if the first radio frequency signal is represented by using the following Formula 1, a transmittance of the silicon microring modulator is represented by using the following Formula 2, and incident light is represented by using the following Formula 3. It should be understood that the transmittance of the silicon microring modulator is a ratio of light emitted from the straight waveguide to light emitted into the straight waveguide.

$$V(t) = A_0 \, cos(\omega t) \ \ \text{Formula 1}$$

$$T(V) = 1 - F[V] \ \ \text{Formula 2}$$

$$E(t) = E_0 \, exp[j\omega_0 t] \ \ \text{Formula 3}$$

V represents an instantaneous amplitude of the first radio frequency signal that is input to the silicon microring modulator, F[V] is a transfer function of the silicon microring modulator, and the transfer function may represent a relationship between a voltage applied to the silicon microring modulator and a wavelength of an absorption peak of the silicon microring modulator. It is assumed that the transfer function has good linearity, and therefore a higher-order derivative of the transfer function may be ignored. According to the Taylor formula, the transmittance represented by the foregoing formula 2 may be approximately represented by the following Formula 4.

$$T(V) \approx T_0 - K \cdot F'[V_0] \cdot [V - V_0] = 1 - \alpha \cdot cos(\omega t) \quad \text{Formula 4}$$

Herein, $\alpha$ is a coefficient related to factors such as performance of the silicon microring modulator and power of the first radio frequency signal.

After the incident light (namely, the continuous laser beam from the light source module) is modulated by the foregoing silicon microring modulator, obtained emergent light (namely, the first laser beam) may be represented by the following Formula 5.

$$E_{out}(t) = T(V) \cdot E(t) = [1 - \alpha \cdot cos(\omega t)]E_0 \, exp[j\omega_0 t]$$

$$= (1 - \alpha)E(t) + \frac{\alpha E_0}{2} exp[(\omega_0 \pm \omega)t] \quad \text{Formula 5}$$

It can be learned from the foregoing Formula 5 that the first laser beam obtained after the continuous laser beam from the light source module is modulated by the silicon microring modulator includes three parts of signals, namely, a carrier signal and two symmetric side band signals. The carrier signal is $(1 - \alpha)E(t)$, an upper side band signal is $\frac{\alpha E_0}{2} exp[(\omega_0 + \omega)t]$, and a lower side band signal is $\frac{\alpha E_0}{2} exp[(\omega_0 - \omega)t]$. Compared with the carrier signal, the upper side band signal is equivalent to performing positive frequency-shifting on a frequency of the first radio frequency signal, and the lower side band signal is equivalent to performing negative frequency-shifting on a frequency of the first radio frequency signal. It should be understood that both the upper side band signal and the lower side band signal belong to frequency modulated continuous light, and the carrier signal is not modulated. Therefore, the carrier signal cannot be used for ranging, and is a useless signal.

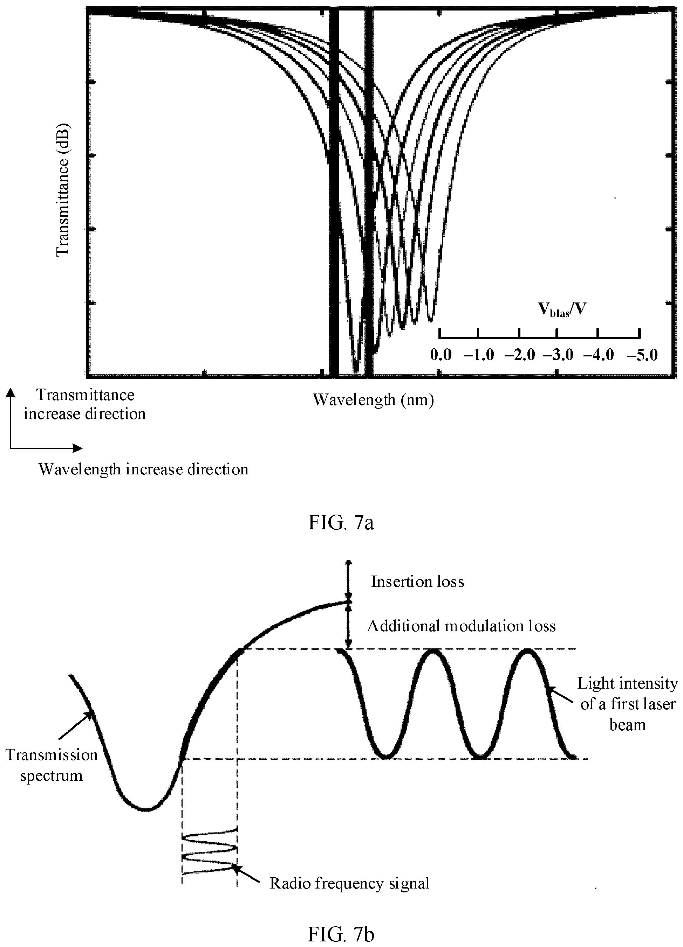

Based on the silicon microring modulator, FIG. 7a is a schematic diagram of a relationship between a voltage applied to a silicon microring modulator and a wavelength of an absorption peak of the silicon microring modulator according to this application. It can be learned from FIG. 7a that, within a specific voltage range, there is good monotonicity between the voltage input to the silicon microring modulator and the wavelength of the absorption peak. In other words, the wavelength of the absorption peak of the silicon microring modulator for the continuous laser beam from the light source module changes with the voltage applied to the silicon microring modulator, so that light intensity modulation can be implemented. Refer to FIG. 7b. A transmission spectrum of the silicon microring modulator is represented by a "V" curve. When the first radio frequency signal applied to the silicon microring modulator is a sine curve, light intensity of the first laser beam modulated by the silicon microring modulator is also a sine curve.

Because a signal modulated by the silicon microring modulator may further have a high-order side band signal, predistortion processing may be performed in advance on a radio frequency signal (namely, a second radio frequency signal) to be applied to the silicon microring modulator, to further improve quality of a first-order side band signal, and suppress an unnecessary noise.

In a possible implementation, predistortion processing may be performed on the second radio frequency signal in a plurality of iterations. Specifically, the following steps may be included.

Step a: The radio frequency module generates a second radio frequency signal: $V_0(t) = A_0 \cos(\pi\gamma t^2)$.

Herein, the second radio frequency signal is an initial radio frequency signal generated by the radio frequency module.

Step b: The radio frequency module loads the second radio frequency signal to the modulation module, and monitors output optical power: $I = B_0(t) \cos(\pi\gamma t^2)$.

Step c: Extract an envelope $B_0(t)$, and calculate normalized flatness: $C = \frac{max(B_0) - min(B_0)}{mean(B_0)}$; if the flatness is greater than a flatness threshold, end the process; or if the flatness is not greater than the flatness threshold, perform step d.

The flatness threshold may be, for example, 10%.

Step d: Calculate an error signal: $err(t) = 1 - \frac{B_0(t)}{mean(B_0)}$.

Step e: Correct the second radio frequency signal by using the error signal, to obtain a corrected radio frequency signal: $V_k(t) = V_{k-1}(t) \cdot [1 + p \cdot err(t)]$.

Herein, p represents a proportional coefficient. If P is very large, the algorithm does not converge; or if P is excessive small, the convergence is slow. By controlling the proportional coefficient p, the algorithm converges through a plurality of iterations, and intensity fluctuation of the first laser beam that is output by the modulation module may be significantly suppressed.

Step f: Input the corrected radio frequency signal $V_k(t)$ into the modulation module, and repeat step b until the flatness is greater than the flatness threshold.

It should be understood that the first radio frequency signal is a corrected radio frequency signal (for example, a radio frequency signal obtained through single predistortion processing). Further, optionally, the first radio frequency signal is a corrected radio frequency signal whose flatness is greater than the flatness threshold. If the determined flatness is greater than the flatness threshold after the second radio frequency signal generated by the radio frequency module is loaded to the modulation module, the first radio frequency signal is the second radio frequency signal generated by the radio frequency module. In this case, the first radio frequency signal is the same as the second radio frequency signal.

It should be noted that, step c to step e may be performed by the processing module.

In addition, if linearity of the transfer function of the used silicon microring modulator is poor, the foregoing predistortion method may also be used to correct the linearity. That is, a single-frequency sine function is used as an input of the modulation module, and a difference between output optical power and expected optical power is calculated, so that the difference is used as the error signal to correct the input radio frequency signal, and a plurality of iterations are performed.

Pre-distortion processing is performed on the radio frequency signal, so that a noise caused by insufficient linearity and frequency response flatness of the modulation module can be effectively reduced, to effectively improve performance of the detection apparatus.

It should be noted that, in addition to the foregoing algorithm, the predistortion algorithm may further test the transfer function of the silicon microring modulator by using a multi-tone signal, and perform pre-emphasis on the generated second radio frequency signal based on a transfer function test result of the multi-tone signal. Specifically, an amplitude of a high frequency part of the second radio frequency signal is increased, and an amplitude of a low frequency part of the second radio frequency is selectively adjusted, to eliminate intensity modulation effect introduced by the transfer function of the silicon microring modulator. In addition, based on the transfer function, windowing is performed on the radio frequency signal in time domain, so that a side lobe of the detection apparatus can be effectively eliminated, and a false detection rate and a missing detection rate are reduced. Alternatively, the predistortion algorithm may also be for a non-linear response. A system time domain response function is first measured, and predistortion processing is performed on a signal by calculating an inverse function of the system time domain response function.

Structure 2: The modulation module includes a silicon-based Mach-Zehnder (Mach-Zehnder modulator, MZ) modulator according to an example not covered by the claims.

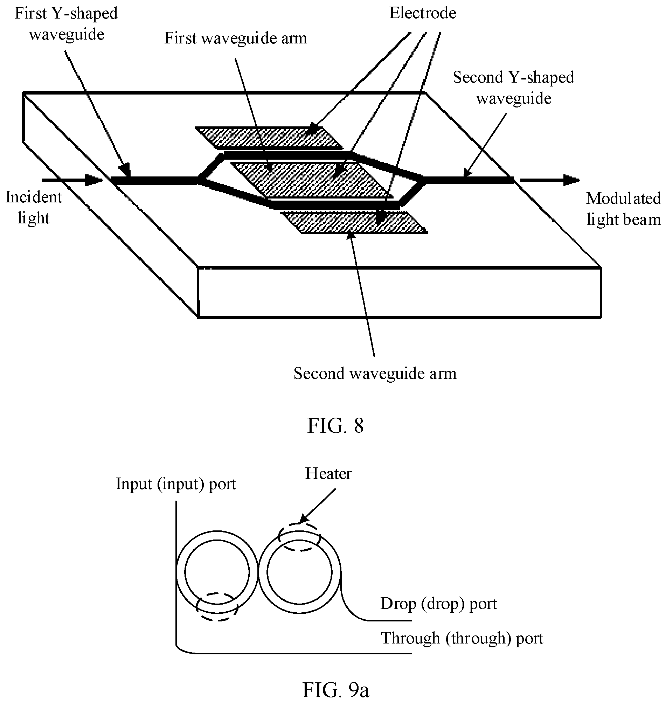

FIG. 8 is a schematic diagram of a structure of an MZ modulator. The MZ modulator may include a first Y-shaped waveguide, a first waveguide arm, a second waveguide arm, and a second Y-shaped waveguide. The first Y-shaped waveguide is configured to: split the continuous laser beam from the light source module into two beams, and respectively propagate the two beams to the first waveguide arm and the second waveguide arm. The first waveguide arm is configured to modulate intensity of the received continuous laser beam to obtain a third laser beam. The second waveguide arm is configured to modulate the intensity of the received continuous laser beam to obtain a fourth laser beam. The second Y-shaped waveguide is configured to: receive the third laser beam from the first waveguide arm and the fourth laser beam from the second waveguide arm, and combine the third laser beam and the fourth laser beam into the first laser beam. A phase of the third laser beam is related to a third radio frequency signal that is input to the first waveguide arm. A phase of the fourth laser beam is related to a fourth radio frequency signal that is input to the second waveguide arm.

For example, the continuous laser beam from the light source module is propagated to the first Y-type waveguide, and is split into a continuous laser beam A and a continuous laser beam B by using the first Y-type waveguide. The continuous laser beam A is propagated to the first waveguide arm, and the continuous laser beam B is propagated to the second waveguide arm. The first waveguide arm modulates intensity of the continuous laser beam A to obtain a third laser beam, and the second waveguide arm modulates intensity of the continuous laser beam B to obtain a fourth laser beam. Both the third laser beam and the fourth laser beam are propagated to the second Y-type waveguide, and the second Y-type waveguide combines the third laser beam and the fourth laser beam into the first laser beam. It should be noted that the continuous laser beam A and the continuous laser beam B have the same intensity.

The following describes a principle of modulating, by the MZ modulator, the received continuous laser beam.

It should be understood that, after passing through a transmission optical path segment, one beam of incident light is split into two same branch light beams for parallel transmission. When the two branch light beams are converged again, a phase difference may be generated after the convergence because a light interference principle is met. Specifically, when a phase difference between the two branch light beams is 2 $k\pi$ (k is an integer), light intensity of the two branch light beams is superimposed; and when the phase difference between the two branch light beams is not 2 $k\pi$, the light intensity of the two branch light beams offsets each other.

In a possible implementation, the first waveguide arm and the second waveguide arm in the MZ modulator are made of an electro-optic material, and N-type doping may be injected into the first waveguide arm, and P-type doping may be injected into the second waveguide arm; or P-type doping may be injected into the first waveguide arm, and N-type doping may be injected into the second waveguide arm. Based on this, the first waveguide arm and the second waveguide arm may form a PN junction, and carrier concentrations in the first waveguide arm and the second waveguide arm may be changed by changing an instantaneous amplitude of a radio frequency signal applied to the PN junction, so that an equivalent refractive index of the two waveguide arms can be changed, and an adjustable phase difference can be introduced into the first waveguide arm and the second waveguide arm of the MZ modulator. It may also be understood that, a phase difference between the third laser beam transmitted in the first waveguide arm and the fourth laser beam transmitted in the second waveguide arm may be adjusted by changing voltages applied to the first waveguide arm and the second waveguide arm, to modulate light intensity of the first laser beam that is output by the second Y-shaped waveguide. For example, if the phase difference between the third laser beam and the fourth laser beam is 0, optical power of combining the third laser beam and the fourth laser beam into the first laser beam reaches a maximum value. If the phase difference between the third laser beam and the fourth laser beam is $\pi$, optical power of combining the third laser beam and the fourth laser beam into the first laser beam reaches a minimum value.

In a possible implementation, the detection apparatus further includes a radio frequency module. The radio frequency module may input the third radio frequency signal to the first waveguide arm, and input the fourth radio frequency signal to the second waveguide arm. A phase of the third laser beam that is output by the first waveguide arm may be determined by the third radio frequency signal, and a phase of the fourth laser beam that is output by the second waveguide arm may be determined by the fourth radio frequency signal.

It should be noted that when the modulation module is an MZ modulator, predistortion processing may also be performed on the radio frequency signal based on the foregoing similar process. Details are not described herein again.

It can be learned from the foregoing content that a frequency sweep signal of the first laser beam that is output by the modulation module may be directly controlled by a radio frequency signal that is input to the modulation module. If the radio frequency signal is a frequency modulated continuous frequency sweep signal, side band signals of the two added symmetric frequency components are also frequency modulated continuous sweep light. Therefore, the radio frequency signal may be controlled to be high-linearity frequency sweep light. In this case, the two generated symmetric side band signals are also high-linearity frequency sweep light. This helps improve frequency sweep linearity of the detection apparatus, and further improves a ranging range and ranging precision of the detection apparatus.

3. First wavelength selection module

In a possible implementation, the first wavelength selection module is configured to allow at least one side band signal in the symmetric side band signals in the first laser beam to pass through and prevent the carrier signal from passing through, to obtain a second laser beam.

Further, optionally, the first wavelength selection module may select an upper side band signal or a lower side band signal from the carrier signal and the symmetric side band signals as an FMCW (or referred to as single side band frequency modulated continuous light). That is, the first wavelength selection module may prevent one side band signal of the carrier signal and the symmetric side band signals from passing through, and allow the other side band signal (namely, the first side band signal) to pass through. In this way, unnecessary interference caused by the symmetric side band signals to a ranging result can be eliminated. It should be understood that the symmetric side band signals cause blur between a Doppler frequency shift and a multi-target frequency shift during ranging, thereby causing a ranging error.

In a possible implementation, the first wavelength selection module needs to meet the following three features, to obtain the second laser beam.

Feature 2.1: The first wavelength selection module has different transmission features for incident light in different wavelength ranges.

It may also be understood that the first wavelength selection module may enable incident light in a specific wavelength range to pass through with a small loss or without a loss, and incident light in another wavelength range except the specific wavelength range has a large loss or cannot pass through, that is, the first wavelength selection module has a small passband loss and a large stopband loss, thereby implementing wavelength selection. In other words, the first wavelength selection module is configured to suppress an unnecessary frequency and allow a required frequency to pass through. In this application, a wavelength range of the second laser beam is a specific wavelength range, and a frequency of the second laser beam is a required frequency.

For example, the first wavelength selection module has a loss less than 3 dB for a wavelength that is allowed for pass-through (or referred to as gating), and has a loss greater than 15 dB for a wavelength that is prevented for pass-through (or referred to as suppression). For example, a wavelength gated by the first wavelength selection module is 1550 nm, and a wavelength suppressed by the first wavelength selection module is 1551 nm. When light of the wavelength 1550 nm and light of the wavelength 1551 nm are separately input to the first wavelength selection module, the first wavelength selection module has optical loss not greater than 3 db for the wavelength 1550 nm, and has optical loss greater than 15 dB for the wavelength 1551 nm, so that the light of the wavelength 1550 nm can pass through, and the light of the wavelength 1551 nm is prevented from passing through.

Feature 2.2: The first wavelength selection module may tune the selected wavelength within a specific range.

Because a center frequency of the laser beam emitted by the light source module is interfered by a plurality of factors, it is difficult to maintain absolute stability. In addition, if a frequency sweep range of the side band signal is changed, a wavelength range of a corresponding side band signal is also changed accordingly. Therefore, the first wavelength selection module should be able to perform corresponding adjustment according to a requirement during wavelength selection, for example, a tunable range is greater than 0.5 nm. This helps improve stability of a distance measured by the detection apparatus.

Feature 2.3: The first wavelength selection module has a large degree of distinguishing between different wavelength ranges.

To further improve precision of a ranging result of the detection apparatus, the first wavelength selection module needs to have high wavelength selection precision. That is, after passing through the first wavelength selection module, two light beams with equal original amplitudes and close wavelengths may have a great difference in amplitudes. For example, the differentiation (or referred to as precision) of wavelength selection may be, for example, 0.1 nm.

Based on the foregoing features of the first wavelength selection module, the following shows two possible structures of the first wavelength selection module as an example.

Structure 1: The first wavelength selection module includes at least one level of ring waveguide.

It may also be understood that the first wavelength selection module may alternatively be a level-1 ring waveguide, or may be a cascaded ring waveguide (or referred to as a multi-order ring waveguide). It should be noted that a roll-off speed is related to a quantity of cascaded ring waveguides. A larger quantity of cascaded ring waveguides indicates a larger roll-off speed. For example, the roll-off speed may be 12 dB/GHz by using a two-level ring waveguide.

FIG. 9a is a schematic diagram of a structure of a cascaded ring waveguide according to this application. For example, a structure of the cascaded ring waveguide is a two-level structure. An input (input) port on one side of the cascaded ring waveguide may be tangent to a silicon-based straight waveguide (the silicon-based straight waveguide may be configured to connect the first wavelength selection module to the modulation module), and the other side of the cascaded ring waveguide is tangent to another silicon-based straight waveguide (the silicon-based straight waveguide may be configured to connect the first wavelength selection module to an optical splitting module). The cascaded ring waveguides may absorb incident light that is in a specific wavelength range and that is from the silicon-based straight waveguide, and couple the incident light to a symmetric silicon-based straight waveguide on the other side, so that the selected light (that is, the second laser beam) in the specific wavelength range is output to the optical transceiver module by using a drop port, and light in a wavelength range other than the specific wavelength range is output by using a through port.

For example, a wavelength gated by the cascaded ring waveguide is 1550 nm, and a wavelength that is prevented by the cascaded ring waveguide for pass through is 1551 nm. When the wavelengths of 1550 nm and 1551 nm are respectively separately input to the cascaded ring waveguide from the input port, light of the wavelength of 1550 nm is output to the optical transceiver module through the drop port, and light of the wavelength of 1551 nm is output through the through port.

In a possible implementation, the first wavelength selection module is configured to obtain the second laser beam based on a received control signal, where the control signal corresponds to a wavelength of the second laser beam. With reference to FIG. 9a, a voltage of a heater corresponding to each level of ring waveguide may be controlled by using the received control signal, to adjust a resonance wavelength (or referred to as a resonance frequency) of the cascaded ring waveguide, so as to control a wavelength range of an optical signal that is allowed to pass through and that is prevented from passing through the cascaded ring waveguide.

In a possible implementation, the heater corresponding to each level of the ring waveguide may be located at an upper layer or a lower layer of a corresponding ring waveguide or at any other nearby location. Further, optionally, when the first wavelength selection modules are generated in batches, a Q value of the ring waveguide may be controlled to control a bandwidth of a selected wavelength range, and the bandwidth may be narrowest to 1 GHz.

In another possible implementation, a radio frequency signal applied to each level of cascaded ring waveguide may be controlled, to control a wavelength range selected by the cascaded ring waveguide.

Because a wavelength of light that is output by the cascaded ring waveguide is affected by a temperature, in a possible implementation, optical power of optical signals that are output through the drop port and the through port may be monitored, and monitored optical power information may be fed back to the processing module, to prevent light of a wavelength that is prevented for pass-through and light of a wavelength that is allowed for pass-through from being output from a same port. The processing module may control a temperature of the heater based on the received optical power information, to adjust a resonance wavelength of the cascaded ring waveguide. In this way, a ratio of the optical power of the light output from the drop port to the optical power of the light output from the through port is 1:1. This helps avoid mismatch between the cascaded ring waveguide and a required side band.

It should be noted that the ring waveguide used as the first wavelength selection module may be the same as or different from the ring waveguide that forms the silicon microring modulator. For example, the ring waveguide used as the first wavelength selection module may not be doped.

Structure 2: The first wavelength selection module includes a fiber Bragg grating.

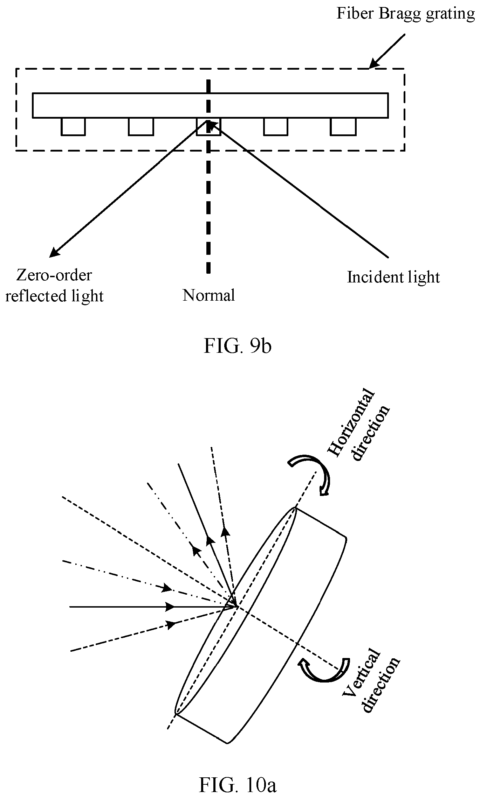

In a possible implementation, the fiber Bragg grating is configured to obtain the second laser beam. FIG. 9b is a schematic diagram of a structure of a fiber Bragg grating according to this application. The fiber Bragg grating is a micro-nano optical component that presents a periodic structure change or a periodic refractive index change, and may perform periodic spatial modulation on an amplitude and/or a phase of incident light. The process may be described by using a diffraction equation (Formula 6) of the Bragg grating, and different diffraction angles correspond to specific diffraction orders.

$$\sin\theta_i - \sin\theta_m = m\lambda/d \ \text{ Formula 6}$$

Herein, $\theta_i$ is an incident angle, $\theta_m$ is a diffraction angle with a diffraction order of m, $\lambda$ is a wavelength of incident light, and d is a grating period (or referred to as a grating constant).

In a possible implementation, a temperature applied to the fiber Bragg grating may be controlled, so that the fiber Bragg grating implements thermal expansion and cold contraction, and the grating period d may be changed. In this way, the fiber Bragg grating can have high diffraction efficiency for at least one side band signal in the symmetric side band signals, and have low diffraction efficiency for a signal of another wavelength, so that the fiber Bragg grating can obtain the second laser beam.

In a possible implementation, the first wavelength selection module may be a passive component.

4. Optical transceiver module

In a possible implementation, the optical transceiver module includes a scanning module, configured to separately emit the second laser beam to the detection area at different scanning angles.

Further, optionally, the scanning module may be a scanner, for example, a reflective scanner. The reflective scanner includes, but is not limited to, a mechanical rotating mirror or a micro electro-mechanical system (micro electro-mechanical system, MEMS) reflector. The reflective scanner changes a scanning angle by mechanical rotation, so that the scanner scans the detection area in different directions. Optionally, the scanner may be in a continuous operation mode, or may be in a step-by-step operation mode. This is not limited in this application.

For example, the detection apparatus may preset a plurality of scanning angles, and the optical transceiver module may separately emit the second laser beam to the detection area at each of the plurality of different scanning angles. FIG. 10a is a schematic diagram of a structure of a scanner according to this application. The scanner may change the scanning angle in a two-dimensional direction (a horizontal direction and a vertical direction), and changing the scanning angle may also be understood as enabling the scanner to be at different scanning angles. Further, optionally, the processing module may control the scanner to rotate in the two-dimensional direction, so that the scanner is at different scanning angles, and separately emits the second laser beam to the detection area. For example, the processing module may control the scanner to first rotate in the horizontal direction and then rotate in the vertical direction, or first rotate in the vertical direction and then rotate in the horizontal direction, or rotate in the vertical direction and the horizontal direction together, or rotate in the horizontal direction and the vertical direction alternately, to scan the detection area.

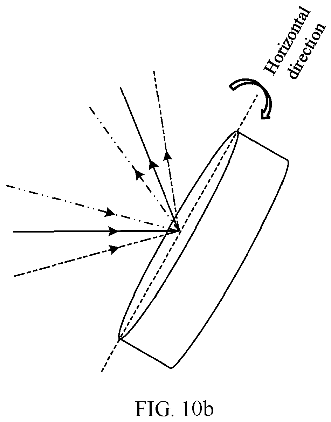

FIG. 10b is a schematic diagram of a structure of another scanner according to this application. The scanner may change the scanning angle in a one-dimensional direction (a horizontal direction), so that the scanner is at different scanning angles. The one-dimensional scanner is used, so that a volume of the detection apparatus can be further simplified, and complexity of controlling the scanner by the processing module can be reduced.

In another possible implementation, a function of the optical transceiver module may alternatively be implemented by using an optical phased array (optical phased array, OPA). A working principle of the OPA is as follows: A phase relationship between optical waves radiated from phase control units (such as an optical phase shifter) is adjusted, so that the optical waves are in a same phase in a specific direction, and mutually-reinforcing interference is generated. As a result, a high-intensity light beam in the direction is generated. However, optical waves that are radiated from the phase control units and that are in another direction are not in a same phase. Therefore, results of interference are canceled, and radiation intensity is close to 0. Under control of the processing module, the phase control units included in the phased array can specify a direction/directions of one or more high-intensity laser beams, to implement scanning.

It should be noted that the optical transceiver module may be specifically divided into an optical sending unit and an optical receiving unit, and the optical sending unit and the optical receiving unit are isolated from each other and do not affect each other.

The processing module in the foregoing embodiments may be a processing module included in the detection apparatus, or may be a processor in a lidar when the detection apparatus is applied to the lidar, or may be a processor in a terminal device when the detection apparatus is applied to the terminal device, or may be a processor in a vehicle when the detection apparatus is applied to the vehicle, or the like. This is not limited in this application.

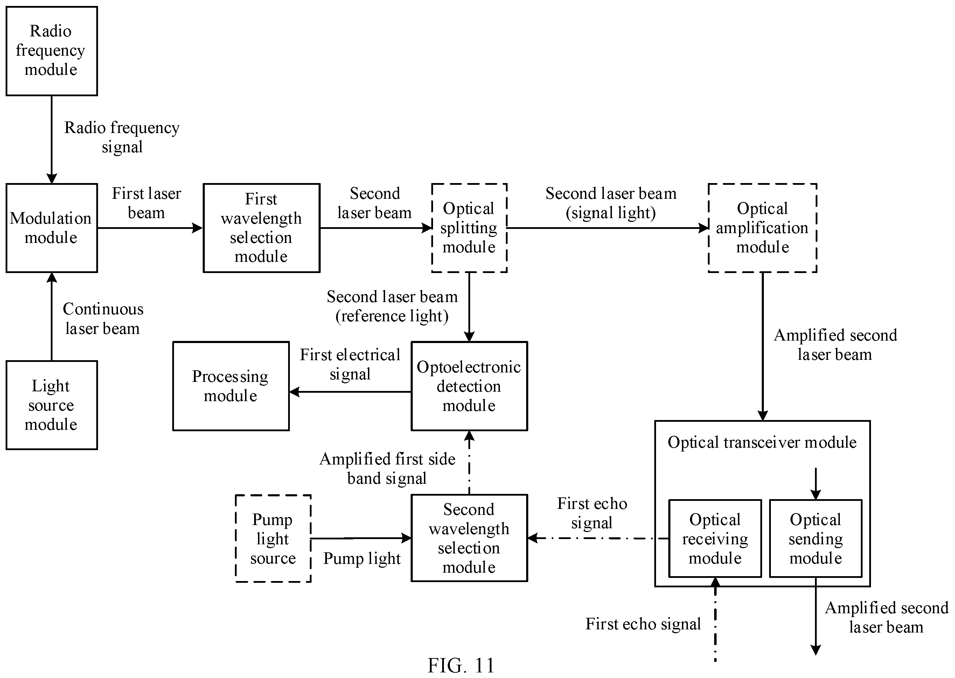

In a possible implementation, the detection apparatus may include a light source module, a modulation module, a first wavelength selection module, and an optical transceiver module. Further, optionally, the detection apparatus may further include at least one of a radio frequency module, a second wavelength selection module, an optical amplification module, an optical splitting module, and a processing module. FIG. 11 is a schematic diagram of a structure of another detection apparatus according to this application. The detection apparatus may include a light source module, a modulation module, a first wavelength selection module, an optical transceiver module, a radio frequency module, a second wavelength selection module, an optical amplification module, an optical splitting module, and an optoelectronic detection module. It should be understood that a structure of the detection apparatus shown in FIG. 11 is merely an example. The detection apparatus in this application may have more or fewer modules than the detection apparatus shown in FIG. 11.

Herein, for the light source module, the modulation module, the first wavelength selection module, the optical transceiver module, and the radio frequency module, refer to the foregoing related descriptions. Details are not described herein again. The following separately describes the second wavelength selection module, the optoelectronic detection module, the optical amplification module, and the optical splitting module.

5. Second wavelength selection module

Generally, optical power of the second laser beam emitted by the detection apparatus to the detection area is limited by two factors: human eye safety, and saturation power of an optical amplifier. The saturation power of the optical amplifier is the main factor. Therefore, the optical power is usually limited to approximately tens of milliwatts (mW). For a detection apparatus used for long-distance measurement, the optical power still cannot meet the requirement. A possible solution is to provide a specific gain for an echo signal, to increase a signal-to-noise ratio of the system, thereby increasing a measurement distance. At the same time, interference of light in other wavelength ranges except the echo signal is suppressed (or prevented). Based on this, the detection apparatus may further include a second wavelength selection module.

In a possible implementation, if the second laser beam includes a first side band signal, the second wavelength selection module is configured to amplify a first echo signal for the second laser beam, to obtain an amplified first side band signal; or if the second laser beam includes symmetric side band signals, the second wavelength selection module is configured to amplify and filter a first echo signal for the second laser beam, to obtain an amplified first side band signal. In other words, the second wavelength selection module is configured to generate a gain for the first side band signal and prevent other signals other than the first side band signal from passing through.

In a possible implementation, the second wavelength selection module needs to meet the following three features, to obtain the amplified first side band signal.

Feature 3.1: The second wavelength selection module may provide a gain for a weak echo signal in a specific wavelength range, and suppress a signal beyond the specific wavelength range.

It may also be understood that the second wavelength selection module may generate a gain for light in some wavelength ranges, and has a large loss or a total loss for light beyond the wavelength range. The second wavelength selection module is an active component.

For example, a gain wavelength bandwidth is approximately 1 GHz, a suppression wavelength bandwidth is approximately 1 GHz, and an in-band gain or in-band suppression is greater than 5 dB.

Feature 3.2: The second wavelength selection module cannot introduce a high amplified spontaneous emission (amplified spontaneous emission, ASE) noise.

Because power of the echo signal is weak, the second wavelength selection module cannot introduce an excessively high ASE noise when providing a gain for the echo signal. For example, the introduced ASE noise is less than -60 dB; otherwise, the signal-to-noise ratio is interfered, and a ranging range of the detection apparatus is reduced.

Based on the features of the second wavelength selection module, the second wavelength selection module may be a non-linear waveguide based on stimulated Brillouin scattering effect. In other words, a medium of the stimulated Brillouin scattering effect is a non-linear waveguide.

In a possible implementation, the non-linear waveguide is configured to amplify the first side band signal by using received pump light, a propagation direction of the pump light is opposite to a propagation direction of the first side band signal, and a difference between a frequency of the pump light and a frequency of the first side band signal meets a preset range.

With reference to a principle of the stimulated Brillouin scattering effect shown in FIG. 2b, a frequency of the pump light, a material of the non-linear waveguide, a length of the non-linear waveguide, and the like may be designed, to implement a function of the second wavelength selection module. It should be noted that, because a wavelength of the echo signal fluctuates within a specific range, the wavelength may exceed an effective gain bandwidth of Brillouin scattering. Therefore, the pump light may be multi-frequency light, to provide a sufficiently large wavelength window.

In a possible implementation, the non-linear waveguide is, for example, an arsenic sulfide waveguide or a silicon nitride waveguide. It may also be understood that the arsenic sulfide waveguide or the silicon nitride waveguide is used as a specific medium to implement the stimulated Brillouin scattering effect. This is because the arsenic sulfide waveguide and the silicon nitride waveguide have strong non-linear effect, and energy transfer efficiency is high. In the arsenic sulfide waveguide and the silicon nitride waveguide that are several centimeters long, a gain or suppression effect of more than 10 dB can be implemented, and a measurement distance of the detection apparatus can be increased by more than three times.

For example, if the echo signal is a lower side band signal in the symmetric side band signals, it may be designed that a difference between the frequency of the pump light and a frequency of the lower side band signal is equal to a preset value. Based on the foregoing principle of the stimulated Brillouin scattering effect, the pump light may transfer a large amount of energy to the lower side band signal, to generate a gain for the lower side band signal.

For another example, if the echo signal is an upper side band signal in the symmetric side band signals, it may be designed that a difference between the frequency of the pump light and a frequency of the upper side band signal is equal to a preset value. Based on the foregoing principle of the stimulated Brillouin scattering effect, the pump light may transfer a large amount of energy to the upper side band signal, to generate a gain for the upper side band signal.

For another example, if the echo signal is equivalent to the symmetric side band signals, and a lower side band signal needs to be selected, it may be designed that a difference between the frequency of the pump light and a frequency of the lower side band signal is equal to a preset value, and a difference between a frequency of an upper side band signal and the frequency of the pump light is equal to a preset value. Based on the foregoing principle of the stimulated Brillouin scattering effect, the upper side band signal may transfer a large amount of energy to the pump light, and then the pump light transfers a large amount of energy to the lower side band signal. In this way, a gain can be generated for the lower side band signal and suppression can be performed for the upper side band signal, to further increase a side band suppression ratio and a signal-to-noise ratio of the detection apparatus, and increase a measurement distance.

It should be noted that the stimulated Brillouin scattering effect has a threshold feature. In other words, if there is no echo signal, the stimulated Brillouin scattering returns to a spontaneous Brillouin scattering state. In addition, the stimulated Brillouin scattering effect has a low ASE noise, which does not affect the signal-to-noise ratio of the detection apparatus.

The detection apparatus including the second wavelength selection module can perform low noise amplification and selective suppression on an extremely weak echo signal, to increase the measured signal-to-noise ratio and help avoid interference from the ASE noise and the symmetric side band signals, so as to further performance of the detection apparatus.

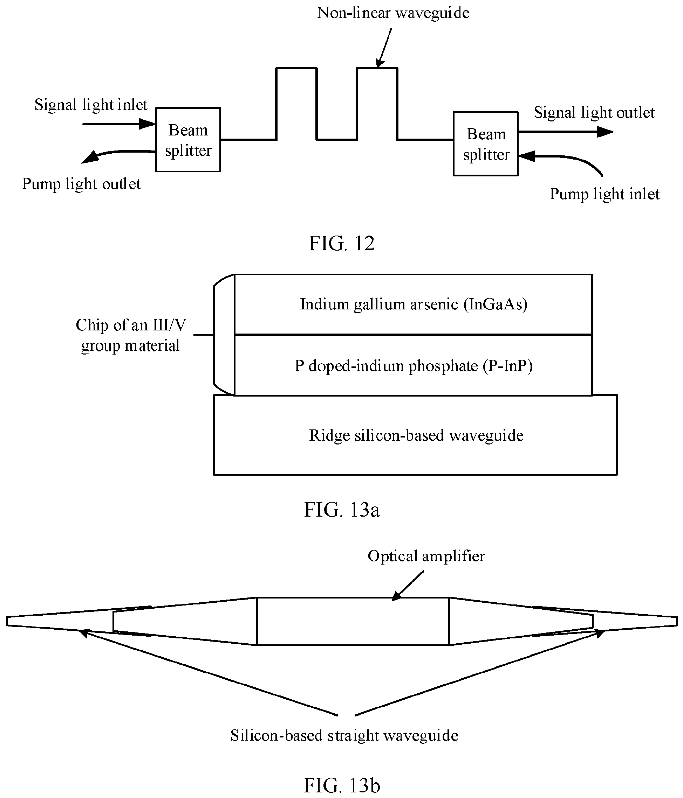

FIG. 12 is a schematic diagram of a structure of a second wavelength selection module according to this application. The second wavelength selection module includes a non-linear waveguide and a demultiplexer (or referred to as a demux or a de-multiplexer). Based on stimulated Brillouin scattering effect, the non-linear waveguide amplifies the first side band signal by using received pump light. The demultiplexer is configured to separate the first side band signal from the pump light.

6. Optoelectronic detection module

In a possible implementation, the optoelectronic detection module (or referred to as a detection module) is configured to convert the first side band signal or the amplified first side band signal into a first electrical signal.

Further, optionally, the optoelectronic detection module may receive the amplified first side band signal from the second wavelength selection module and a part of the second laser beam (reference light) from the optical splitting module, and perform coherent detection based on the amplified first side band signal and the part of the second laser beam, to obtain the first electrical signal (namely, a beat signal). Alternatively, the optoelectronic detection module may receive the first side band signal from the optical transceiver module and a part of the second laser beam (reference light) from the optical splitting module, and perform coherent detection based on the first side band signal and the part of second laser beam, to obtain the first electrical signal (namely, a beat signal). For the optical splitting module, refer to the following related description. Details are not described herein again.

For example, the optoelectronic detection module is, for example, a photon detector (photon detector, PD), a single-photon avalanche diode (single-photon avalanche diode, SPAD), a P-type semiconductor-intrinsic layer-N-type semiconductor (positive intrinsic negative, PIN) photodiode (also referred to as a PIN junction diode), an avalanche photodiode (avalanche photodiode, APD), a single-photon avalanche diode (single-photon avalanche diode, SPAD), an SPAD array, a PIN-type photodiode array, or an APD array.

7. Processing Module

In a possible implementation, the processing module is configured to determine information about a target based on the first electrical signal from the optoelectronic detection module.

Further, optionally, the processing module may be configured to perform target positioning analysis based on the first electrical signal, to form a three-dimensional (three-dimensional, 3D) point cloud image, so as to complete 3D ranging imaging, 3D modeling, or the like on the target.

For example, the processing module may be a general-purpose processor, a field programmable gate array (field programmable gate array, FPGA), a signal data processing (digital signal processing, DSP) circuit, an application-specific integrated circuit (application-specific integrated circuit, ASIC), or another programmable logic device.

8. Optical amplification module

In a possible implementation, the optical amplification module is configured to amplify the second laser beam from the first wavelength selection module.

Herein, the optical amplification module needs to have large saturated output power. For example, the saturated output power of the optical amplification module is greater than 13 dB. Further, optionally, a beat noise introduced by the optical amplification module affects a ranging result to a specific extent. Therefore, a noise figure introduced by the optical amplification module should not be excessively high. For example, the noise figure introduced by the optical amplification module is less than 10 dB.

FIG. 13a is a schematic diagram of a structure of an optical amplification module according to this application. For example, the optical amplification module is an optical amplifier. The optical amplifier sequentially includes an indium gallium arsenic (InGaAs) layer, a P doped-indium phosphide (P-InP) layer, and a ridge silicon-based waveguide from top to bottom. In other words, a chip integrating an III/V group material in the vertical direction of the ridge silicon-based waveguide may form an optical amplifier. Because the chip of the III/V group material has a weak waveguide feature, the chip of the III/V group material and the ridge silicon-based waveguide may implement mutual coupling of light in the vertical direction.

Specifically, a port may be reserved for the ridge silicon-based waveguide when the chip of the III/V group material is manufactured through photoetching, and a port may be reserved for the chip of the III/V group material when the ridge silicon-based waveguide is manufactured. Then, the reserved port of the ridge silicon-based waveguide is bonded with the reserved port of the chip of the III/V group material, to implement coupling between the chip of the III/V group material and the ridge silicon-based waveguide.

In a possible implementation, for a connection relationship between an optical amplifier and a silicon-based straight waveguide, refer to FIG. 13b.

9. Optical splitting module

In a possible implementation, the optical splitting module is configured to split the second laser beam from the first wavelength selection module into two beams, where one beam is used as reference light for coherent detection, and the other beam is used as signal light. The reference light is propagated to the optoelectronic detection module. After being amplified by the optical amplification module, signal light may be emitted, by using the optical transceiver module, to a detection area that needs to be scanned, or signal light may be directly emitted, by using the optical transceiver module, to a detection area that needs to be scanned.

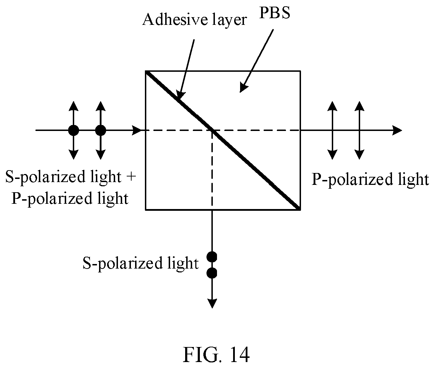

In a possible implementation, the optical splitting module may be a polarization beam splitter. The polarization beam splitter may include two polarizing beam splitters (polarizing beam splitters, PBSs), and oblique surfaces of the two PBSs are bonded by using an adhesive layer (as shown in FIG. 14). The PBS is an optical element that totally transmits a P-polarized component and reflects most (at least 90% or more) of an S-polarized component after a light beam passes through, based on a property that a transmittance of P-polarized light is 1 and a transmittance of S-polarized light is less than 1 when the light beam is incident at a Brust angle, a multi-layer film structure for a plurality of times at the Brust angle by plating the multi-layer film structure on an oblique surface of a right-angle prism, and then forming a cube structure by using an adhesive layer. For example, the polarization beam splitter splits incident light (P-polarized light and S-polarized light) into horizontal polarized light and vertical polarized light, namely, the P-polarized light and the S-polarized light. The P-polarized light totally passes through the multi-film structure, and the S-polarized light is reflected at an angle of 45 degrees. An emergent direction of the S-polarized light is at angle of 90 degrees to an emergent direction of the P-polarized light.

In another possible implementation, the optical splitting module may alternatively be a diffraction optical element (diffractive optical element, DOE), and the DOE may evenly split the second laser beam from the first wavelength selection module into two beams. It may be understood that a quantity of beams split, by the DOE, from the second laser beam and a spacing between laser beams may be determined by a physical structure of the DOE.

Based on the foregoing described structure and function principles of the detection apparatus, this application may further provide a chip. The chip may include the detection apparatus in any one of the foregoing embodiments. Further, optionally, modules integrated into a same chip may be connected by using a silicon-based waveguide. Therefore, the modules need to have good compatibility with the silicon-based waveguide. In this way, a loss introduced by coupling is avoided. Certainly, the chip may further include another component, for example, a communication interface.

Based on the foregoing described structure and function principles of the detection apparatus, this application may further provide a lidar. The lidar may include the detection apparatus in any one of the foregoing embodiments. Further, optionally, the lidar further includes a processor. The processor may be configured to determine information about a target based on a first side band signal. For information about the target, refer to the foregoing related descriptions. Details are not described herein again.

Based on the foregoing described structure and function principles of the detection apparatus, this application may further provide a terminal device. The terminal device may include the detection apparatus in any one of the foregoing embodiments. Further, optionally, the terminal device may further include a processor. If the detection apparatus does not include a processing module, the processor in the terminal device may be configured to receive a first side band signal from the detection apparatus, and determine information about a target based on the first side band signal.

Further, optionally, the processor may further plan a driving route of the terminal device based on the determined information about the target, for example, avoiding obstacles on the driving route. Certainly, the terminal device may further include another component, for example, a memory and a wireless communication apparatus.

For example, the terminal device may include a vehicle (for example, an unmanned vehicle, an intelligent vehicle, an electric vehicle, or a digital vehicle), a robot, a surveying and mapping device, an unmanned aerial vehicle, a smart home device, an intelligent manufacturing device, an intelligent transportation device (for example, an automated guided vehicle (automated guided vehicle, AGV), or an unmanned transportation vehicle).

**Claims**

1. A detection apparatus, comprising a light source module (401), a modulation module (402), a first wavelength selection module (403), and an optical transceiver module (404), wherein

   the light source module (401) is configured to emit a continuous laser beam;
   the modulation module (402) is configured to modulate the continuous laser beam from the light source module (401) to obtain a first laser beam, wherein the first laser beam comprises a carrier signal and symmetric side band signals;
   the first wavelength selection module (403) is configured to allow at least one side band signal in the symmetric side band signals to pass through and prevent the carrier signal from passing through, to obtain a second laser beam; and
   the optical transceiver module (404) is configured to: emit the second laser beam to a detection area, and receive a first echo signal for the second laser beam, wherein the first echo signal comprises the at least one side band signal, and a first side band signal in the at least one side band signal comprised in the first echo signal is used to detect a target,
   **characterized in that** the modulation module (402) comprises a silicon microring modulator, and the silicon microring modulator comprises a straight waveguide and a ring waveguide that are coupled to each other; and the straight waveguide and the ring waveguide are configured to modulate intensity of the continuous laser beam.

2. The detection apparatus according to claim 1, wherein the optical transceiver module (404) comprises a scanning module, configured to separately emit the second laser beam to the detection area at different scanning angles.

3. The detection apparatus according to claim 1 or 2, wherein the detection apparatus further comprises a radio frequency module; and
   the radio frequency module is configured to input a first radio frequency signal to the ring waveguide, wherein the first radio frequency signal is a linear frequency modulation signal, and the first radio frequency signal is used by the ring waveguide to modulate the intensity of the continuous laser beam.

4. The detection apparatus according to claim 3, wherein the radio frequency module is further configured to: generate a second radio frequency signal, and perform predistortion processing on the second radio frequency signal to obtain the first radio frequency signal.

5. The detection apparatus according to any one of claims 1 to 4, wherein the first wavelength selection module (403) comprises at least one level of ring waveguide; and
   the first wavelength selection module (403) is configured to obtain the second laser beam based on a received control signal, wherein the control signal corresponds to a wavelength of the second laser beam.

6. The detection apparatus according to any one of claims 1 to 4, wherein the first wavelength selection module (403) comprises a fiber Bragg grating, and the fiber Bragg grating is configured to obtain the second laser beam.

7. The detection apparatus according to any one of claims 1 to 6, wherein the detection apparatus further comprises a second wavelength selection module; and
the second wavelength selection module is configured to amplify, or amplify and filter the first echo signal for the second laser beam, to obtain an amplified first side band signal.

8. The detection apparatus according to claim 7, wherein the second wavelength selection module comprises a non-linear waveguide.

9. The detection apparatus according to claim 8, wherein the non-linear waveguide is configured to amplify the first side band signal by using received pump light, a propagation direction of the pump light is opposite to a propagation direction of the first side band signal, and a difference between a frequency of the pump light and a frequency of the first side band signal meets a preset range.

10. The detection apparatus according to any one of claims 1 to 9, wherein a linewidth range of the continuous laser beam is greater than 0 and not greater than 3 megahertz.

11. The detection apparatus according to any one of claims 1 to 10, wherein the light source module (401) comprises a semiconductor laser.

12. The detection apparatus according to any one of claims 1 to 11, wherein the detection apparatus further comprises an optical amplification module, configured to amplify the second laser beam from the first wavelength selection module (403).

**Patentansprüche**

1. Detektionseinrichtung, umfassend ein Lichtquellenmodul (401), ein Modulationsmodul (402), ein erstes Wellenlängenauswahlmodul (403) und ein optisches Sende-Empfangsmodul (404), wobei

das Lichtquellenmodul (401) dazu konfiguriert ist, einen kontinuierlichen Laserstrahl zu emittieren;
das Modulationsmodul (402) dazu konfiguriert ist, den kontinuierlichen Laserstrahl aus dem Lichtquellenmodul (401) zu modulieren, um einen ersten Laserstrahl zu erlangen, wobei der erste Laserstrahl ein Trägersignal und symmetrische Seitenbandsignale umfasst;
das erste Wellenlängenauswahlmodul (403) dazu konfiguriert ist, das Durchlassen mindestens eines Seitenbandsignals in den symmetrischen Seitenbandsignalen zu ermöglichen und das Durchgehen des Trägersignals zu verhindern, um einen zweiten Laserstrahl zu erlangen; und
das optische Sende-Empfangsmodul (404) dazu konfiguriert ist:

den zweiten Laserstrahl in einen Detektionsbereich zu emittieren und ein erstes Echosignal für den zweiten Laserstrahl zu empfangen, wobei das erste Echosignal das mindestens eine Seitenbandsignal umfasst und ein erstes Seitenbandsignal in dem mindestens einen Seitenbandsignal, das in dem ersten Echosignal enthalten ist, zum Detektieren eines Ziels verwendet wird,
**dadurch gekennzeichnet, dass** das Modulationsmodul (402) einen Silizium-Mikroringmodulator umfasst und der Silizium-Mikroringmodulator einen geraden Wellenleiter und einen Ringwellenleiter umfasst, die miteinander gekoppelt sind; und
der gerade Wellenleiter und der Ringwellenleiter dazu konfiguriert sind, eine Intensität des kontinuierlichen Laserstrahls zu modulieren.

2. Detektionseinrichtung nach Anspruch 1, wobei das optische Sende-Empfangsmodul (404) ein Scanmodul umfasst, das dazu konfiguriert ist, den zweiten Laserstrahl separat in unterschiedlichen Scanwinkeln in den Detektionsbereich zu emittieren.

3. Detektionsvorrichtung nach Anspruch 1 oder 2, wobei die Detektionseinrichtung ferner ein Hochfrequenzmodul umfasst; und das Hochfrequenzmodul dazu konfiguriert ist, ein erstes Hochfrequenzsignal in den Ringwellenleiter einzugeben, wobei das erste Hochfrequenzsignal ein lineares Frequenzmodulationssignal ist und das erste Hochfrequenzsignal durch den Ringwellenleiter verwendet wird, um die Intensität des kontinuierlichen Laserstrahls zu modulieren.

4. Detektionseinrichtung nach Anspruch 3, wobei das Hochfrequenzmodul ferner dazu konfiguriert ist: ein zweites Hochfrequenzsignal zu generieren und eine Vorverzerrungsverarbeitung an dem zweiten Hochfrequenzsignal durchzuführen, um das erste Hochfrequenzsignal zu erlangen.

5. Detektionseinrichtung nach einem der Ansprüche 1 bis 4, wobei das erste Wellenlängenauswahlmodul (403) mindestens eine Ebene von Ringwellenleitern umfasst; und
das erste Wellenlängenauswahlmodul (403) dazu konfiguriert ist, den zweiten Laserstrahl basierend auf einem empfangenen Steuersignal zu erlangen, wobei das Steuersignal einer Wellenlänge des zweiten Laserstrahls entspricht.

6. Detektionseinrichtung nach einem der Ansprüche 1 bis 4, wobei das erste Wellenlängenauswahlmodul (403) ein Faser-Bragg-Gitter umfasst und das Faser-Bragg-Gitter dazu konfiguriert ist, den zweiten Laserstrahl zu empfangen.

7. Detektionsvorrichtung nach einem der Ansprüche 1 bis 6, wobei die Detektionsvorrichtung ferner ein zweites Wellenlängenauswahlmodul umfasst; und
das zweite Wellenlängenauswahlmodul dazu konfiguriert ist, das erste Echosignal für den zweiten Laserstrahl zu verstärken oder zu verstärken und zu filtern, um ein verstärktes erstes Seitenbandsignal zu erlangen.

8. Detektionseinrichtung nach Anspruch 7, wobei das zweite Wellenlängenauswahlmodul einen nichtlinearen Wellenleiter umfasst.

9. Detektionseinrichtung nach Anspruch 8, wobei der nichtlineare Wellenleiter dazu konfiguriert ist, das erste Seitenbandsignal unter Verwendung von empfangenem Pumplicht zu verstärken, eine Ausbreitungsrichtung des Pumplichts entgegengesetzt zu einer Ausbreitungsrichtung des ersten Seitenbandsignals ist und eine Differenz zwischen einer Frequenz des Pumplichts und einer Frequenz des ersten Seitenbandsignals einen voreingestellten Bereich erfüllt.

10. Detektionseinrichtung nach einem der Ansprüche 1 bis 9, wobei ein Linienbreitenbereich des kontinuierlichen Laserstrahls größer als 0 und nicht größer als 3 Megahertz ist.

11. Detektionseinrichtung nach einem der Ansprüche 1 bis 10, wobei das Lichtquellenmodul (401) einen Halbleiterlaser umfasst.

12. Detektionseinrichtung nach einem der Ansprüche 1 bis 11, wobei die Detektionseinrichtung ferner ein optisches Verstärkungsmodul umfasst, das dazu konfiguriert ist, den zweiten Laserstrahl aus dem ersten Wellenlängenauswahlmodul (403) zu verstärken.

**Revendications**

1. Appareil de détection, comprenant un module de source lumineuse (401), un module de modulation (402), un premier module de sélection de longueur d'onde (403) et un module émetteur-récepteur optique (404), dans lequel

le module de source lumineuse (401) est configuré pour émettre un faisceau laser continu ;
le module de modulation (402) est configuré pour moduler le faisceau laser continu provenant du module de source lumineuse (401) pour obtenir un premier faisceau laser, dans lequel le premier faisceau laser comprend un signal porteur et des signaux de bande latérale symétriques ;
le premier module de sélection de longueur d'onde (403) est configuré pour permettre à au moins un signal de bande latérale dans les signaux de bande latérale symétrique de passer et empêcher le signal porteur de passer, pour obtenir un second faisceau laser ; et
le module émetteur-récepteur optique (404) est configuré pour :

émettre le second faisceau laser vers une zone de détection, et recevoir un premier signal d'écho pour le second faisceau laser, dans lequel le premier signal d'écho comprend l'au moins un signal de bande latérale, et un premier signal de bande latérale dans l'au moins un signal de bande latérale compris dans le premier signal d'écho est utilisé pour détecter une cible,
**caractérisé en ce que** le module de modulation (402) comprend un modulateur à micro-anneaux de silicium, et le modulateur à micro-anneaux de silicium comprend un guide d'ondes droit et un guide d'ondes annulaire qui sont couplés l'un à l'autre ; et
le guide d'ondes droit et le guide d'ondes annulaire sont configurés pour moduler l'intensité du faisceau laser continu.

2. Appareil de détection selon la revendication 1, dans lequel le module émetteur-récepteur optique (404) comprend un module de balayage, configuré pour émettre séparément le second faisceau laser vers la zone de détection à différents angles de balayage.

3. Appareil de détection selon la revendication 1 ou 2, dans lequel l'appareil de détection comprend également un module radiofréquence ; et
le module radiofréquence est configuré pour entrer un premier signal radiofréquence dans le guide d'ondes annulaire, dans lequel le premier signal radiofréquence est un signal de modulation de fréquence linéaire, et le premier signal radiofréquence est utilisé par le guide d'ondes annulaire pour moduler l'intensité du faisceau laser continu.

4. Appareil de détection selon la revendication 3, dans lequel le module radiofréquence est également configuré pour :
générer un second signal radiofréquence, et réaliser un traitement de prédistorsion sur le second signal radiofréquence pour obtenir le premier signal radiofréquence.

5. Appareil de détection selon l'une quelconque des revendications 1 à 4, dans lequel le premier module de sélection de longueur d'onde (403) comprend au moins un niveau de guide d'ondes annulaire ; et
le premier module de sélection de longueur d'onde (403) est configuré pour obtenir le second faisceau laser sur la base d'un signal de commande reçu, dans lequel le signal de commande correspond à une longueur d'onde du second faisceau laser.

6. Appareil de détection selon l'une quelconque des revendications 1 à 4, dans lequel le premier module de sélection de longueur d'onde (403) comprend un réseau de Bragg sur fibre, et le réseau de Bragg sur fibre est configuré pour obtenir le second faisceau laser.

7. Appareil de détection selon l'une quelconque des revendications 1 à 6, dans lequel l'appareil de détection comprend également un second module de sélection de longueur d'onde ; et
le second module de sélection de longueur d'onde est configuré pour amplifier, ou amplifier et filtrer le premier signal d'écho pour le second faisceau laser, pour obtenir un premier signal de bande latérale amplifié.

8. Appareil de détection selon la revendication 7, dans lequel le second module de sélection de longueur d'onde comprend un guide d'ondes non linéaire.

9. Appareil de détection selon la revendication 8, dans lequel le guide d'ondes non linéaire est configuré pour amplifier le premier signal de bande latérale à l'aide de la lumière de pompage reçue, une direction de propagation de la lumière de pompage est opposée à une direction de propagation du premier signal de bande latérale, et une différence entre une fréquence de la lumière de pompage et une fréquence du premier signal de bande latérale satisfait à une plage prédéfinie.

10. Appareil de détection selon l'une quelconque des revendications 1 à 9, dans lequel une plage de largeur de ligne du faisceau laser continu est supérieure à 0 et non supérieure à 3 mégahertz.

11. Appareil de détection selon l'une quelconque des revendications 1 à 10, dans lequel le module de source lumineuse (401) comprend un laser à semi-conducteur.

12. Appareil de détection selon l'une quelconque des revendications 1 à 11, dans lequel l'appareil de détection comprend également un module d'amplification optique, configuré pour amplifier le second faisceau laser provenant du premier module de sélection de longueur d'onde (403).

Full width
at half
maximum

$f_1$    $f_2$

FIG. 1

B

Transmit signal

Kr

Echo signal

0

T

FIG. 2a

Signal light A

Signal light A

Signal light B

Signal light B

Medium

Pump light

FIG. 2b

Pump light

Gain area

Dissipation area

Frequency

FIG. 2c

FIG. 3a

FIG. 3b

| Light source module 401 | Continuous laser beam → | Modulation module 402 | First laser beam → | First wavelength selection module 403 |
|---|---|---|---|---|

Second laser beam ↓

First echo signal ← — · — · — · —

| Optical transceiver module 404 |

First echo signal ┆

Second laser beam ↓

FIG. 4

Reflective semiconductor optical amplifier

Silicon-based photonic chip

Silicon nitride microring

Reflective surface

FIG. 5a

FIG. 5b

FIG. 6a

Coupling area     Straight waveguide

Input port     $k_2$     Output port

$k_1$

Ring waveguide

FIG. 6b

Si

| N+ | Si | P+ |

FIG. 6c

Coupling area

Straight waveguide

Through
(through) port

Input port

$k_2$

$k_1$

Ring waveguide

$k_3$

Input port

$k_4$

Drop (drop) port

Straight waveguide

Coupling area

FIG. 6d

FIG. 7a

FIG. 7b

First Y-shaped
waveguide

First waveguide arm

Electrode

Second Y-shaped
waveguide

Incident
light

Modulated
light beam

Second waveguide arm

FIG. 8

Input (input) port

Heater

Drop (drop) port

Through (through) port

FIG. 9a

Fiber Bragg grating

Zero-order
reflected light            Normal            Incident light

FIG. 9b

Horizontal direction

Vertical direction

FIG. 10a

FIG. 10b

FIG. 11

EP 4 286 893 B1

Non-linear waveguide

Signal light inlet

Beam splitter

Pump light outlet

Signal light outlet

Beam splitter

Pump light inlet

FIG. 12

Chip of an III/V group material

Indium gallium arsenic (InGaAs)

P doped-indium phosphate (P-InP)

Ridge silicon-based waveguide

FIG. 13a

Optical amplifier

Silicon-based straight waveguide

FIG. 13b

Adhesive layer    PBS

S-polarized light +
P-polarized light

P-polarized light

S-polarized light

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110206758
- EP 3614170 A1
- EP 1921485 A1